(19) Europäisches Patentamt
European Patent Office
Office européen des brevets

(11) EP 0 520 241 B1

(12) EUROPÄISCHE PATENTSCHRIFT

(45) Veröffentlichungstag und Bekanntmachung des Hinweises auf die Patenterteilung:
**05.03.1997 Patentblatt 1997/10**

(51) Int Cl.[6]: **C09B 62/503**

(21) Anmeldenummer: **92109743.2**

(22) Anmeldetag: **10.06.1992**

(54) **Verfahren zur Herstellung von Reaktivfarbstoffen und neue Reaktivfarbstoffe**

Process for the preparation of reactive dyestuffs and new reactive dyestuffs

Procédé de préparation de colorants réactifs et nouveaux colorants réactifs

(84) Benannte Vertragsstaaten:
**CH DE FR GB LI**

(30) Priorität: **22.06.1991 DE 4120696**

(43) Veröffentlichungstag der Anmeldung:
**30.12.1992 Patentblatt 1992/53**

(73) Patentinhaber: **BAYER AG**
**51368 Leverkusen (DE)**

(72) Erfinder: **Herd, Karl-Josef, Dr.**
**W-5068 Odenthal-Holz (DE)**

(56) Entgegenhaltungen:
**DE-C- 842 198** **GB-A- 712 037**

- **K. VENKATARAMAN: "The Chemistry of Synthetic Dyes", 1972, vol. VI, Reactive Dyes, pages 36-41: "b. beta-Sulfatoethyl sulfones", Academic Press, New York, U**

EP 0 520 241 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

## Beschreibung

Es sind aus GB 712 037 und DE 842 198 Verfahren zur Herstellung von Reaktivfarbstoffen bekannt, die aber nicht immer befriedigend sind.

Die Erfindung betrifft ein Verfahren zur Herstellung wasserlöslischer Vinylsulfonyl- (bzw. β-Sulfatoethylsulfonyl-) gruppenhaltiger Reaktivfarbstoffe der Struktur (1)

$$[A]\text{-}(SO_2X)_{1\ \text{oder}\ 2} \qquad (1)$$

worin

A = chromophorer Rest aus der Azo-, Polyazo, Anthrachinon-, Formazan- oder Triphendioxazin-Reihe, der vorzugsweise mit wenigstens einer -$SO_3H$-Gruppe substituiert ist

X = $CH{=}CH_2$ oder $CH_2CH_2OSO_3H$,

dadurch gekennzeichnet, daß man Mercaptoverbindungen der Struktur

$$[A]\text{-}(S\text{-}CH_2\text{-}CH_2\text{-}OH)_{1\ \text{oder}\ 2}$$

oxidiert und sulfatiert sowie gegebenenfalls den Sulfatoethylsulfonyl-Rest mit Basen in den Vinylsulfonylrest überführt.

Aus JP-A-44-24 899 ist zwar bereits ein Verfahren zur Herstellung von β-Sulfatoethylsulfonyl-substituierten Farbstoffen durch Oxidation eines Thioethers bekannt, iedoch beschränkt auf Phthalocyanine.

Gegenstand der vorliegenden Erfindung sind weiterhin neue faserreaktive Mono- und Disazofarbstoffe der Struktur

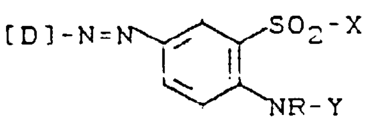

(1a)

worin

D = Rest einer Diazokomponente aus der Benzol- oder Naphthalinreihe, der neben einer beliebigen Anzahl von Sulfo- oder Carboxygruppen auch Substituenten, vorzugsweise $C_1$-$C_4$-Alkyl; $C_1$-$C_4$-Alkoxy, Phenoxy, Halogen, Acetylamino, Benzoylamino, Ureido, Phenylsulfonyl oder $C_1$-$C_4$-Alkylsulfonyl, und gegebenenfalls substituierte Phenylazo- bzw. NaphthylazoSubstituenten und faserreaktive Gruppen, wie $SO_2X$, $CH_2$-$SO_2X$ oder heterocyclische Pyrimidin- oder Triazinreaktivsysteme, enthalten kann, ausgenommen OH, $NH_2$, Monoalkyl- bzw. Dialkylamino oder Arylamino -wie Anilino- als Substituenten.

X = $CH{=}CH_2$ oder $CH_2CH_2OSO_3H$ und

Y = H, $C_1$-$C_6$-Alkyl, mit Cl, OH, CN, $CO_2H$, $OSO_3H$, $SO_3H$, $SO_2X$ oder $C_1$-$C_4$-Alkoxy substituiertes $C_1$-$C_6$-Alkyl, Allyl, Cycloalkyl, wie z.B. Cyclohexyl, Cyclopentyl oder Cyclopropyl, mit $CO_2H$, $OSO_3H$ oder $SO_3H$ substituiertes Cycloalkyl, Benzyl oder mit OH, $CO_2H$ oder $SO_3H$ substituiertes Benzyl, insbesondere aber $CH_2CH_2OSO_3H$,

R = H, $C_1$-$C_4$-Alkyl, mit Cl, OH, CN, $CO_2H$, $OSO_3H$, $SO_3H$, $SO_2X$ oder $C_1$-$C_4$-Alkoxy substituiertes $C_1$-$C_4$-Alkyl, Allyl, Benzyl oder mit OH, $CO_2H$ beziehungsweise Sulfo substituiertes Benzyl, insbesondere aber H.

Die Gruppierung NR-Y steht auch für einen gesättigten N-Heterocyclus, wie z.B.

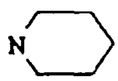 , 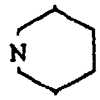 , 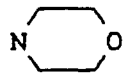 oder 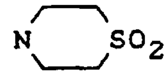 .

Bevorzugte Substituenten am Phenylazo- bzw. NaphthylazoRest sind Sulfo, Carboxy, $C_1$-$C_4$-Alkyl, $C_1$-$C_4$-Alkoxy, Halogen $SO_2X$ und $CH_2SO_2X$.

Aus der DE-A-3 512 340 sind bereits Azoreaktivfarbstoffe bekannt, welche an einem Phenylrest gleichzeitig einen β-Sulfatoethylsulfonyl- und einen β-Sulfatoethylaminorest tragen. Jedoch sind diese Gruppierungen Teil der Diazokomponente während erfindungsgemäß diese Gruppierungen Teil der Kupplungskomponente sind.

Bevorzugt sind Farbstoffe der Struktur (2) und (3),

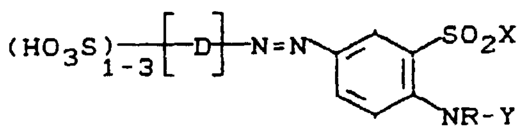 (2)

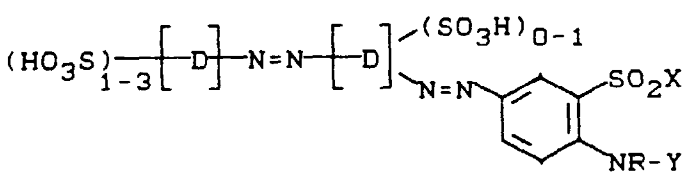 (3)

worin

D = Phenylen- oder Naphthylenrest, der zusätzlich mit Carboxy, $C_1$-$C_4$-Alkyl, $C_1$-$C_4$-Alkoxy, Penoxy, Halogen, $C_1$-$C_4$-Alkylsulfonyl, $SO_2X$, $CH_2SO_2X$ oder einem faserreaktiven heterocyclischen Pyrimidin- oder Triazinreaktivrest substituiert sein kann und wobei in Formel (3) die Bedeutungen für beide Gruppen -D-gleich oder verschieden sein können.

Besonders hervorzuheben sind bifunktionelle faserreaktive Farbstoffe der Struktur (4) bis (8)

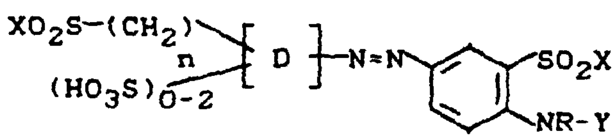 (4)

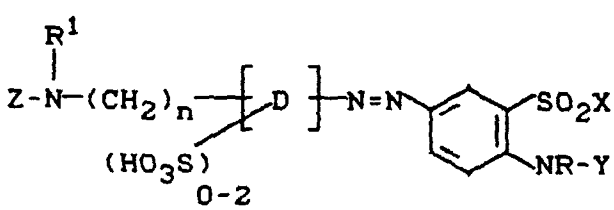 (5)

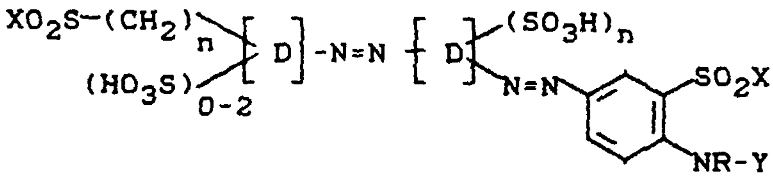

(6)

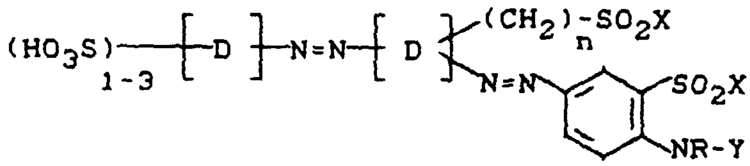

(7)

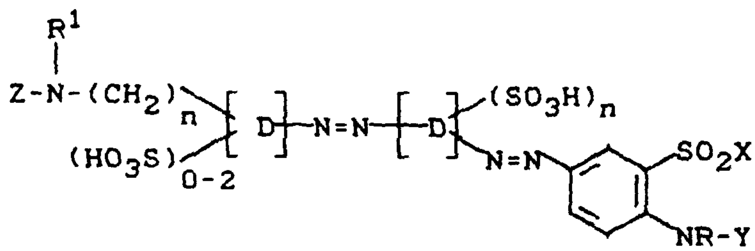

(8)

worin

n = 0 oder 1

$R^1$ = H oder $C_1$-$C_4$-Alkyl,

Z = faserreaktiver halogenhaltiger Rest aus der Triazin- oder Pyrimidinreihe sowie

D = Phenylen oder Naphthylenrest, der zusätzlich mit Carboxy, Methyl, Ethyl, Methoxy, Ethoxy, Chlor, Brom oder Fluor substituiert sein kann, wobei die Bedeutung für beide Gruppen D in Formel (6), (7) und (8) gleich oder verschieden sein kann, und worin

R, X und Y die unter Formel (1a) genannte Bedeutung haben.

Der faserreaktive Rest Z steht für solche chlor- oder fluorhaltigen Triazin- bzw. Pyrimidinreste, wie sie z.B. in EP-A 395 951 beschrieben sind, vorzugsweise für einen Monofluor- bzw. Monochlortriazinreste oder einen 5-Chlor-2,6-difluor-4-pyrimidinyl- bzw. einen 5-Chlor-6-fluor-4-pyrimidinyl-Rest.

Ausgewählte Farbstoffe sind solche mit der Struktur (9) bis (19)

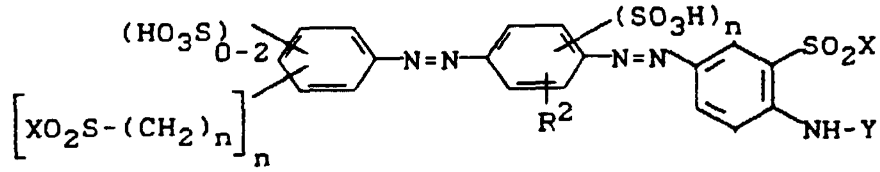

(9)

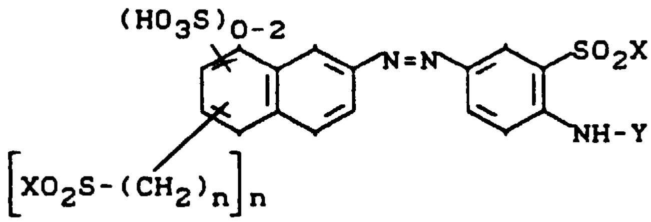

(10)

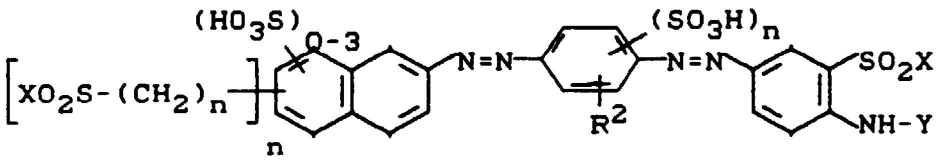

(11)

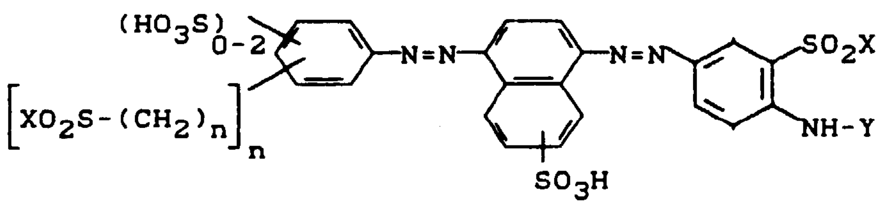

(12)

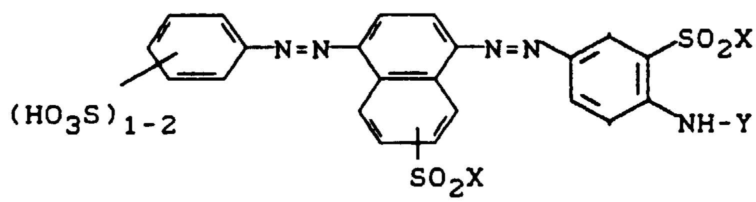

(13)

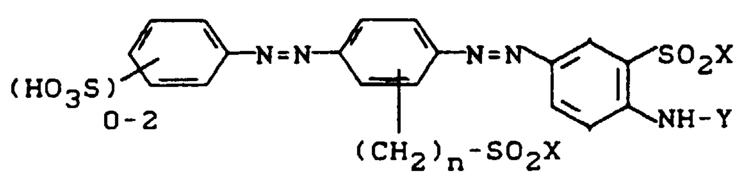

(14)

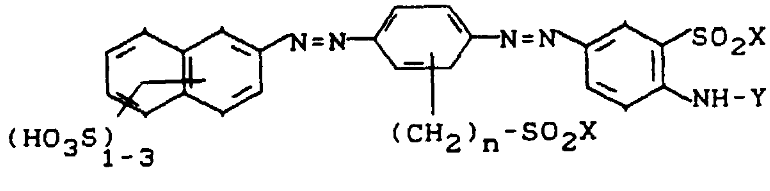

(15)

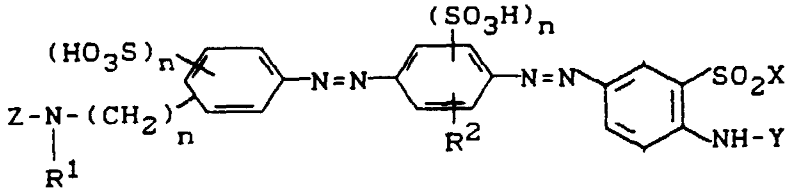

(16)

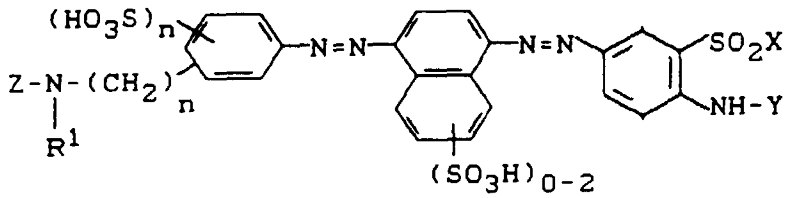

(17)

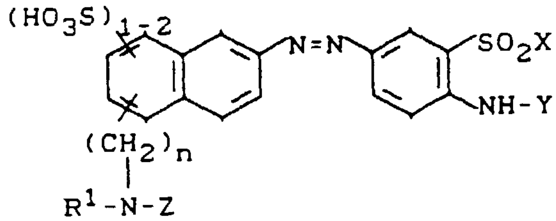

(18a)

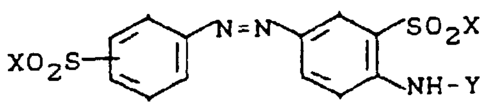

(18b)

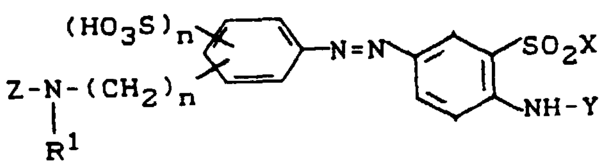

(19)

worin

$R^2$ = H, $CH_3$, $OCH_3$, Cl oder $CH_2SO_2X$

und die übrigen Substituenten n, $R^1$, Z, X und Y die unter Formel (8) angegebene Bedeutung haben.

Von diesen ausgewählten Farbstofftypen der Struktur (9) bis (19) sind besonders die hervorzuheben, bei denen der Rest Y : = $CH_2CH_2OSO_3H$, wie z.B. Farbstoffe der Struktur (20) bis (31)

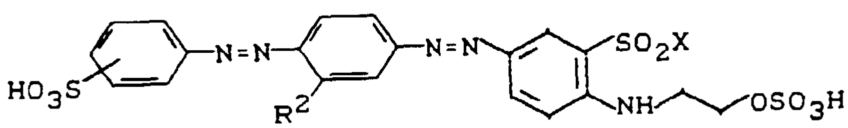

(20)

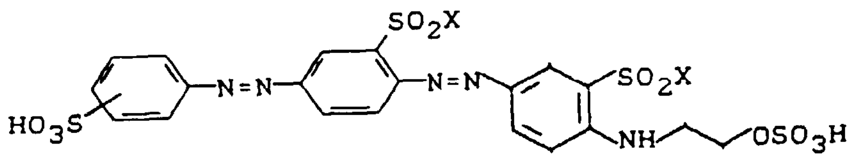

(21)

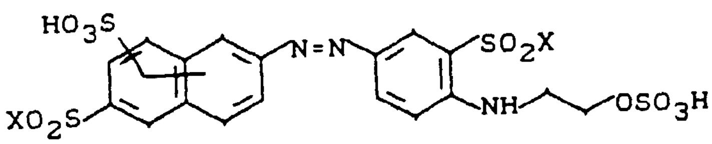

(22)

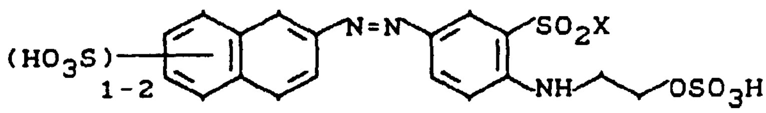

(23)

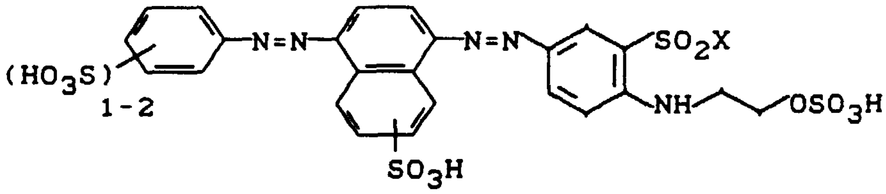

(24)

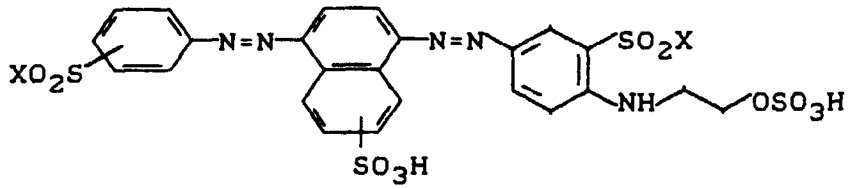

(25)

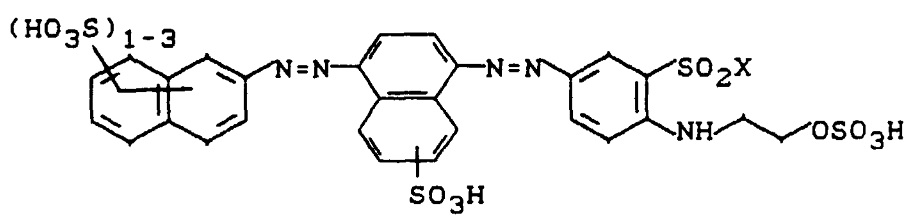

(26)

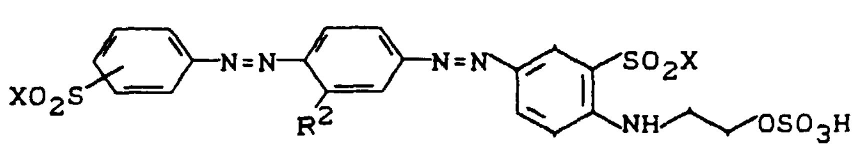

(27)

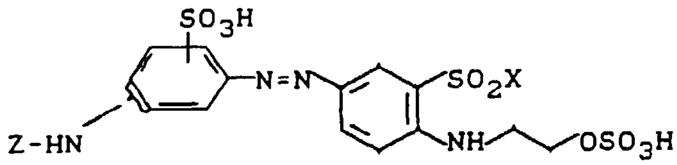

(28)

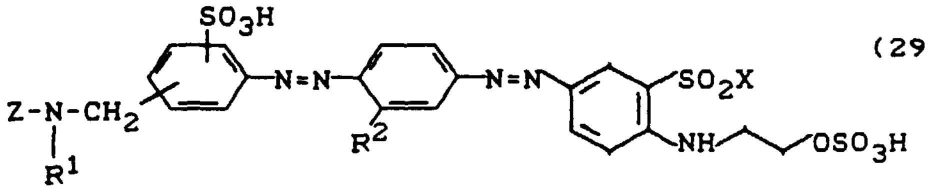

(29)

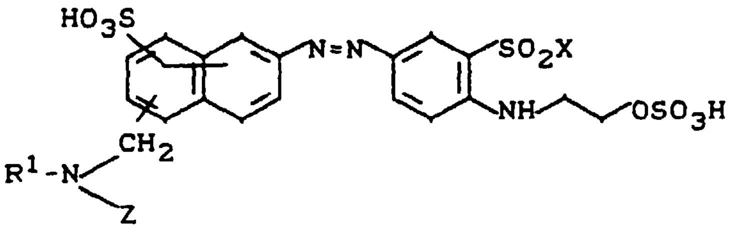

(30)

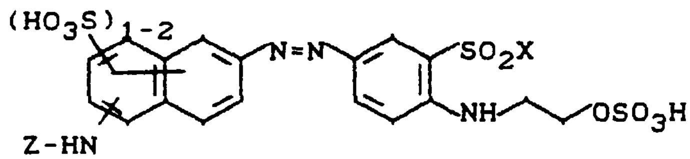

(31)

worin die Substituenten

$R^1$ = H oder $C_1$-$C_4$-Alkyl

$R^2$ = H, $CH_3$, $OCH_3$, Cl oder $CH_2SO_2X$

X = $-CH{=}CH_2$ oder $-CH_2CH_2OSO_3H$
und Z die unter Formel (8) angegebene Bedeutung hat.

Die Herstellung der Farbstoffe (1a), worin A aus Formel (1) mit dem Rest

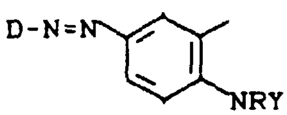

gleichzusetzen ist, erfolgt, indem man Thioverbindungen der Struktur (32)

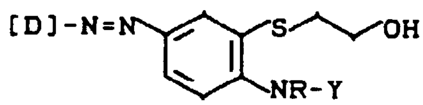

(32)

worin

Y = die unter (1a) genannte Bedeutung, insbesondere $CH_2CH_2OH$, und

D und R die unter (1a) genannte Bedeutung haben,

wie in EP-A-137 417 beschrieben
zu Sulfonen der Struktur (33) aufoxidiert

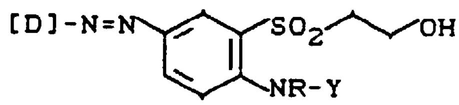

(33)

und diese in bekannter Weise zu (1a) mit $X = CH_2CH_2OSO_3H$ sulfatiert.

Hydroxylalkylgruppen in R und Y in (33) werden dabei in Sulfatoalkylgruppen überführt.

Eine besondere Ausführungsform des Verfahrens besteht darin, daß man Verbindungen der Struktur

$$[A]-(S-C_2H_4-OH)_{1\ \text{oder}\ 2} \qquad (34),$$

bzw. (32) in wäßrigem Medium mit Wasserstoffperoxidlösung, gegebenenfalls unter Wolframat- oder Vanadat-Katalyse, bei Temperaturen im Bereich von 20-100°C, vorzugsweise bei 60-80°C, und pH-Werten zwischen 5-10, vorzugsweise zwischen pH 7-9, oxidiert, und die resultierenden isolierten Sulfone in konz. Schwefelsäure, Schwefelsäure-monohydrat, Oleum oder Schwefeltrioxid bei Temperaturen zwischen 0-40°C zu (1) bzw. (1a) mit X=Sulfatoethyl sulfatiert.

Farbstoffe mit X = Vinyl resultieren nach bekannten Verfahrensweisen aus solchen mit X = Sulfatoethyl unter erhöhten pH-Werten, wie etwa bei 9-11.

Eine weitere bevorzugte Ausführungsform des Verfahrens besteht darin, daß man die Sulfatierung und Oxidation gleichzeitig durchführt, indem man Verbindungen (34)

$$[A]-(S-C_2H_4-OH)_{1\ \text{oder}\ 2} \qquad (34)$$

bzw. (32) in konz. Schwefelsäure, Schwefelsäure-monohydrat oder Oleum bei 10-50°C mit Peroxodisulfaten umsetzt.

Die Zwischenprodukte der Struktur (32) erhält man durch Azokupplung von diazotiertem [D]-$NH_2$ auf Verbindungen der Struktur (35).

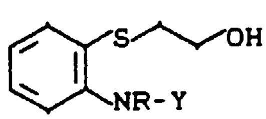

(35)

Diese Kupplungskomponenten (35) sind durch Ethoxylierung von o-Aminothiophenol und N-substituierten o-Aminothiophenolen mit Ethylenoxid oder Chlorethanol unter alkalischen Bedingungen herstellbar. Die Komponente (35) mit R = H und Y = $CH_2CH_2OH$ ist durch Umsetzung von Benzthiazol, Ethylenoxid und Wasser und nachfolgende

Hydrolyse der resultierenden N-Formylverbindungen (36)

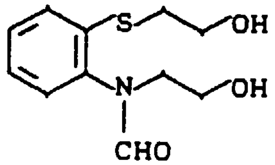

(36)

zugänglich. Mit R substituierte o-Aminothiophenole erhält man einfach durch Alkylierung von Benzthiazol und nachfolgende ringöffnende Hydrolyse der Ammoniumverbindungen (37)

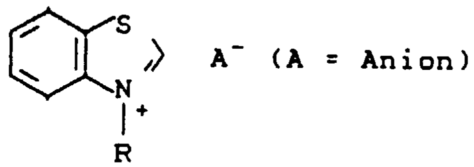

(37)

Eine andere Möglichkeit zur Darstellung von Verbindungen (35) besteht in der Alkylierung von Vorstufen der Formel

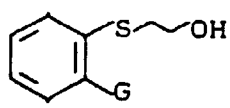

worin G = $NH_2$, NHR oder NHY.

Die Alkylierung kann z.B. mit Alkylhalogeniden R-Hal beziehungsweise Y-Hal, worin Hal = Cl, Br, F, mit aktivierten Olefinen, wie z.B. Acrylsäurederivaten oder Vinylsulfonylderivaten, oder reduktiv mit Aldehydderivaten erfolgen. Bevorzugt sind solche Kupplungskomponenten (35), bei denen die Reste R und Y mit einer Sulfo, Carboxy oder insbesondere mit einer Hydroxygruppe substituiert sind.

Reaktivfarbstoffe der Struktur (7) sind auch herstellbar, indem man Thioverbindungen der Struktur (38)

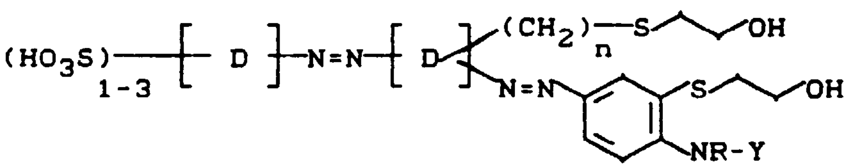

(38)

oxidiert und anschließend sulfatiert. Entsprechende Zwischenprodukte (38) erhält man z.B. durch Diazotieren von Thioverbindungen der Formel (39)

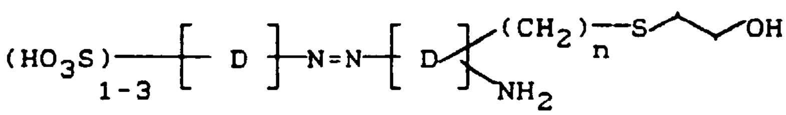

(39)

bzw. (32) mit Y und R = H und nachfolgendes Kuppeln auf Verbindungen der Struktur (35).

Reaktivfarbstoffe der Struktur (5) sind auch herstellbar, indem man Farbstoffe der Struktur (40), die - wie für (1a) beschrieben - zugänglich sind,

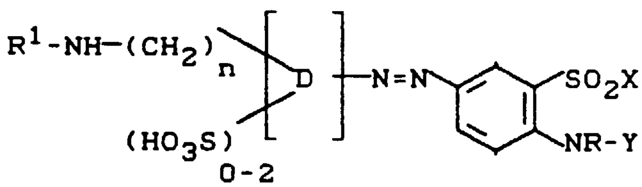

(40)

mit einer heterocyclischen Reaktivkomponente Z-Hal, worin Hal = Cl oder F, in Gegenwart säurebindender Mittel in bekannter Weise kondensiert. Dieses Herstellungsverfahren ist auch auf die Farbstoffe (8) übertragbar.

Die angegebenen Formeln sind die der freien Säuren. Bei der Herstellung werden im allgemeinen die Salze erhalten, insbesondere die Alkalisalze, wie Natrium-, Kalium- oder Lithiumsalze.

Die neuen erfindungsgemäßen Farbstoffe eignen sich zum Färben und Bedrucken von hydroxyl- und amidgruppenhaltigen Materialien, insbesondere Wolle und Cellulosematerialien. Sie zeichnen sich durch eine hohe Reaktivität und einen hohen Fixiergrad aus. Die mit diesen Farbstoffen erhältlichen gelben, orangen und braunen Färbungen und Drucke zeichnen sich außerdem durch eine hohe Faser-Farbstoff-Bindungsstabilität sowie durch eine hervorragende Stabilität gegenüber Oxidationsmitteln, wie peroxid- oder chlorhaltigen Waschmitteln, aus.

Die Farbstoffe können sowohl als Feststofformierungen als auch als konzentrierte Lösungen eingesetzt werden. Sie eignen sich auch in Mischungen mit anderen Reaktivfarbstoffen, insbesondere für Trichromien.

Die Herstellung und Verwendung soll anhand der nachfolgenden Beispiele erläutert werden.

<u>Herstellung von Zwischenprodukten</u>

<u>Beispiel 1</u>

Eine Emulsion aus 135 g Benzothiazol und 1 g eines üblichen Emulgators in 500 ml Wasser wird auf 60°C erwärmt, und es wird für 1 Stunde Stickstoff durchgeleitet. Über einen Zeitraum von ca. 12 Stunden dosiert man dann insgesamt ca. 300 g Ethylenoxid so zu, daß ein pH-Wert zwischen 9,5 und 10,5 aufrechterhalten wird. Die Reaktion wird dünnschichtchromatographisch verfolgt. Sobald weniger als 1 % der Ausgangskonzentration des Benzothiazols nachweisbar sind, wird die Ethylenoxidzufuhr gestopt und die Reaktionslösung unter Durchleiten eines kräftigen Stickstoffstromes für weitere 2 Stunden auf 80°C erwärmt. Nachdem auf diese Weise das restliche Ethylenoxid entfernt wurde, kühlt man die ca. 800 ml Reaktionslösung auf Raumtemperatur ab. Die Reaktionslösung enthält neben Glykol und geringen Mengen Polyglykolen relativ einheitliches Hydroxyethylanilin-Derivat der Formel

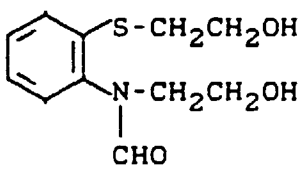

und kann direkt weiter umgesetzt werden.

Zur Charakterisierung des Produkts wird eine 80 ml-Probe der Lösung bei pH 7 extraktiv und destillativ aufgearbeitet. Es resultiert ein zähes farbloses Öl, dem aufgrund der $^1$H-NMR- und IR-Daten die obige Struktur zugeordnet werden kann.

| | |
|---|---|
| IR (Nujol-Verreibung): | 1662 $cm^{-1}$ (CO-Schw.) |
| 1H-NMR ($d_6$-DMSO): | $\delta$ = 3,05 (2H,m); 3,48 (2H,m); 3,60 (2H, m); 3,65 (2H, m); 4,68 (t, OH); 4,94 (t, OH); 7,15-7,50 (m, 4H); 8,00 (s, CHO). |
| Massenspektrum: | m/e = 241 ($M^+$, 45 %); 213 ($M^+$-CO, 45 %); 182 (65 %); 164 (55 %); 136 (100 %). |

<u>Beispiel 2</u>

800 ml Reaktionslösung aus Beispiel 1 werden mit 200 ml einer 70 Xigen Schwefelsäure versetzt und für eine Stunde auf 90-95°C erwärmt. Danach wird abgekühlt und unter Außenkühlung mit konzentrierter Natronlauge neutralisiert und anschließend auf pH 12,5 gestellt. Dabei scheidet sich ein farbloses Öl ab.

(Die Reaktionslösung aus Beispiel 1 kann aber auch alkalisch hydrolysiert werden, indem man mit Natronlauge auf pH 12,5-13,0 stellt und für 30 Minuten auf 80-85°C erwärmt)
Das Öl wird abgetrennt und als Hydroxyethylanilin der Formel

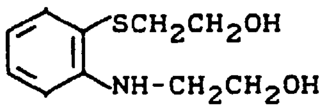

charakterisiert.

$^1$H-NMR ($d_6$-DMSO): δ = 2,77 (t, 2H); 3,18 (m, 2H); 3,42 (m, 2H); 3,60 (m, 2H); 4,81 (t, OH); 4,83 (t, OH); 5,46 (t, NH); 6,50-6,63 (m, 2H); 7,15 (m, 1H); 7,30 (m, 1H).

Beispiel 3

137 g 2-(N-Methylamino)thiophenol werden in 200 ml Wasser durch Zugabe von 120 ml 40%iger Natronlauge gelöst. Die Lösung wird auf 90°C erwärmt. Nachdem durch Einleiten von Stickstoff der Reaktionsraum sauerstofffrei erhalten worden ist, werden über einen Zeitraum von ca. 2-3 Stunden 50 g Ethylenoxid eingeleitet. Anschließend rührt man noch 30 Minuten bei 90-95°C unter einem $N_2$-Strom nach und kühlt dann auf 40°C ab. Das als Öl abgeschiedene (2-Hydroxyethyl)-(2-N-methylaminophenyl)sulfid der Struktur

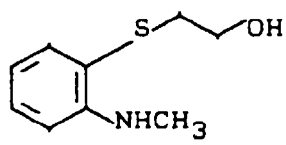

wird von der wäßrigen Phase abgetrennt und kann in dieser Form direkt als Kupplungskomponente eingesetzt werden.

Beispiel 4

23,6 g 7-Amino-1,3-naphthalindisulfonsäure-mono-Natriumsalz werden in 150 ml Wasser/50 g Eis und 20 ml konzentrierter Salzsäure angerührt und bei 5 bis 10°C tropfenweise mit 17 ml einer Natriumnitritlösung (300 g/l) versetzt. Die Diazotierung ist nach 1,5 Stunden beendet. Der geringe Überschuß an Nitrit wird durch Amidosulfonsäurezugabe zerstört. Die cremefarbene Suspension wird mit Sodalösung auf pH 2,5 gestellt. Dazu tropft man bei ca. 10°C eine auf pH 2,0 eingestellte Lösung von 15,0 g der freien Base aus Beispiel 2 in 100 ml Wasser. Es wird 4 bis 5 Stunden bei 10°C gerührt (pH 1,5-2,0). Zur Vervollständigung der Kupplungsreaktion wird der pH-Wert durch Zugabe von Natriumacetat auf 4,5 erhöht und erneut 2 Stunden nachgerührt. Es werden 40 g Kochsalz zugesetzt, 1 Stunde gerührt und der Niederschlag durch Absaugen isoliert. Nach dem Trocknen resultieren 48 g eines salzhaltigen Farbstoffes der Formel

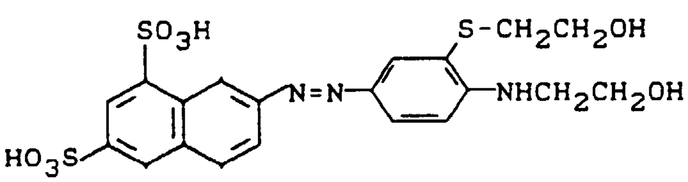

λmax = 454 nm ($H_2O$, pH 7-8)

$^1$H-NMR ($d_6$-DMSO): δ = 2,88 (t, 2H); 3,35 (t, 2H); 3,50 (t, 2H); 3,65 (m, 2H); 5,15 (breites s, 2 OH); 6,17 (t, NH); 6,85 (d, 1H); 7,83-8,07 (m, 4H); 8,16 (s, 1H); 8,30 (s, 1H); 9,30 (s, 1H).

Beispiel 5

47 g des Farbstoffes aus Beispiel 4 werden in 250 ml Wasser bei pH 8-8,5 angerührt, mit 0,2 g Natriumwolframat versetzt und auf 70°C erwärmt. Man tropft 30 ml einer ca. 35%igen wäßrigen Wasserstoffperoxidlösung zu. Die Temperatur sollte dabei zwischen 70 und 80°C betragen. Nach 2 Stunden wird die Oxidation dünnschichtchromatographisch überprüft. Dabei ist auch das während der Oxidation durchlaufende Sulfoxid-Derivat nachweisbar. Es werden gegebenenfalls nochmals 10 bis 15 ml Wasserstoffperoxidlösung nachgesetzt, um auch das restliche Sulfoxid-Derivat zum Sulfon-Derivat aufzuoxidieren. Es wird anschließend 2 Stunden bei 80°C gerührt, auf Raumtemperatur abgekühlt und mit verdünnter Schwefelsäure auf pH 0,5 bis 1,0 angesäuert. Der Farbstoff wird mit 35 g Kochsalz und 5 g Kaliumchlorid ausgesalzen und isoliert. Nach dem Trocknen erhält man 38 g eines salzhaltigen Farbstoffes der Formel

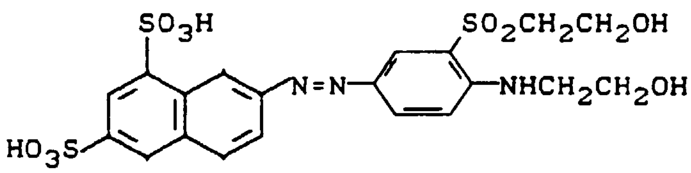

Der Azoxy-Anteil scheint aufgrund von DC und NMR nur wenige Prozente zu betragen.
λmax = 406 nm ($H_2O$, pH 7-8)

$^1$H-NMR ($d_6$-DMSO): δ = 3,42 (t, 2H); 3,55 (t, 2H); 3,68 (t, 2H); 3,75 (t, 2H); 5,0-5,3 (breit, 2 OH); 6,9 (breites s, NH); 7,13 (d, 1H); 7,98 (dd, 1H); 8,05-8,17 (m, 2H); 8,20 (s, 1H); 8,27 (d, 1H); 8,32 (d, 1H); 9,35 (d, 1H).

Variiert man nun in Beispiel 4 die Diazokomponente, so. sind analog zur Kupplungsvorschrift (Beispiel 4) und Oxidationsvorschrift (Beispiel 5) weitere interessante Farbstoffe mit Azosulfid- und Azo/Azoxysulfon-Struktur herstellbar:

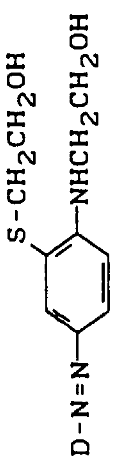

| Bsp. | D | λmax ($H_2O$, pH 7-8) |
|---|---|---|
| 6 | 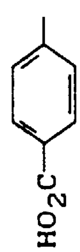 | 432 nm |
| 7 | 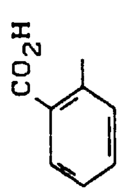 | 406 nm |
| 8 | 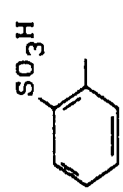 | 414 nm |
| 9 | 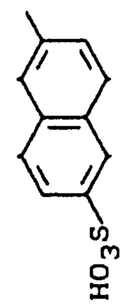 | 448 nm |
| 10a | 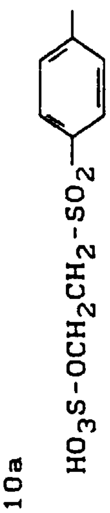 | 446 nm |
| 10b | 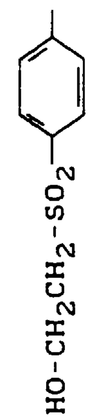 | 448 nm |

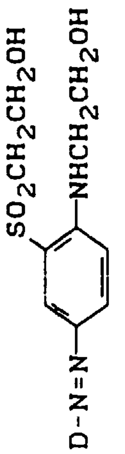

| Bsp. | λmax ($H_2O$, pH 7-8) |
|---|---|
| 11 | 396 nm |
| 12 | 374 nm |
| 13 | 397 nm |
| 14 | 402, 455 (sh)nm |
| 15a | 404 nm |
| 15b | 404 nm |

Beispiel 16

12,5 g 4-Aminobenzolsulfonsäure werden analog zu Beispiel 4 diazotiert, und die resultierende Suspension mit Sodalösung auf pH 2,5 gestellt. Dazu tropft man bei 5 bis 10°C eine auf pH 2,0 eingestellte Lösung von 15,0 g der freien Base aus Beispiel 2 in 100 ml Wasser. Es wird 5 Stunden bei pH 1,5 bis 2,5 und 10°C und anschließend 3 Stunden bei pH 3,5 bis 4,0 und 10°C gerührt. Der pH-Wert wird dabei mit Natriumacetatlösung erhöht. Nach erfolgter Kupplung wird der pH-Wert mit Sodalösung auf 8,0 eingestellt. Es resultiert eine klare Lösung des Azofarbstoffes der Formel

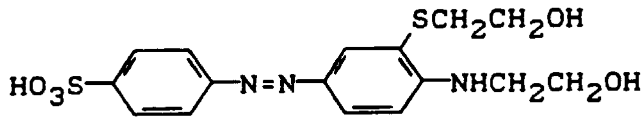

λmax = 430 nm

Die Lösung wird mit 0,2 g Natriumwolframat versetzt und auf 60°C erwärmt. Es werden über einen Zeitraum von 15 Minuten 35 ml einer 35 %igen wäßrigen Wasserstoffperoxidlösung zudosiert, und die Reaktion bei 70 bis 80°C gehalten. Die Oxidation zum Sulfon ist nach ca. 3 bis 4 Stunden beendet. Es wird auf 20°C abgekühlt, auf pH 6,0 gestellt und mit 45 g Kochsalz ausgesalzen. Nach weiteren 2 Stunden Rühren wird abgesaugt und getrocknet. Man erhält 32 g eines goldgelben Farbstoffpulvers der Struktur

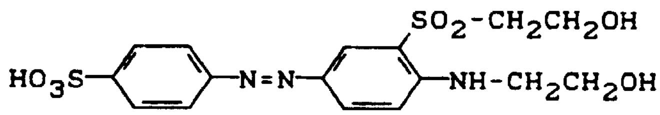

λmax = 396 nm -($H_2O$, pH 7-8)

| | |
|---|---|
| $^1$H-NMR ($d_6$-DMSO): | δ = 3,38 (t, 2H); 3,50 (t, 2H); 3,60-3,75 (m, 4H); 5,0 (breites s, 2 OH); 6,94 (t, NH ); 7,08 (d, 1H); 7,78 (m, 4H); 8,05 (dd, 1H); 8,17 (d, 1H). |

Erfindungsgemäße Verbindungen

Beispiel 17:

35 g des Farbstoffes aus Beispiel 5 werden portionsweise und unter Rühren bei 15-25°C in 50 ml Schwefelsäuremonohydrat eingetragen und für 2 Stunden bei 20-25°C gerührt. Die rote Lösung wird anschließend auf 150 g Eis und 50 ml Wasser ausgetragen, mit 20 g Natriumchlorid ausgesalzen und durch Abnutschen isoliert. Die feuchte Farbstoffpaste wird in 150 ml Wasser angerührt, und die Mischung mit festem Natiumhydrogencarbonat neutralisiert. Nach Absaugen und Trocknen resultieren 45 g eines salzhaltigen rotbraunen Reaktivfarbstoffpulvers, das Baumwolle in goldgelben Tönen färbt und dem die Struktur

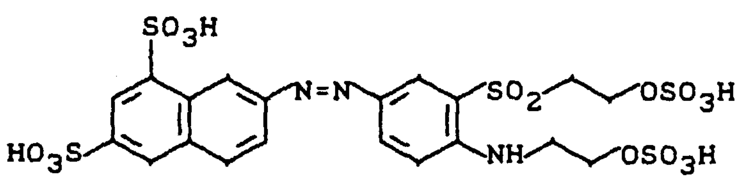

(404 nm)

zukommt.

Analog zu Beispiel 17 lassen sich auch die Farbstoffe der Beispiele 11 bis 15 sulfatieren. Das Resultat sind gelbe Reaktivfarbstoffe, wie

Beispiel 18:

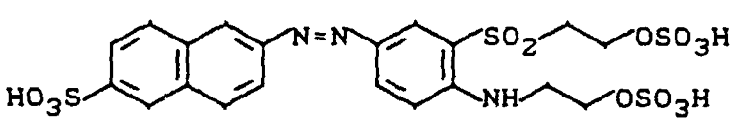

(401 nm)

Beispiel 19:

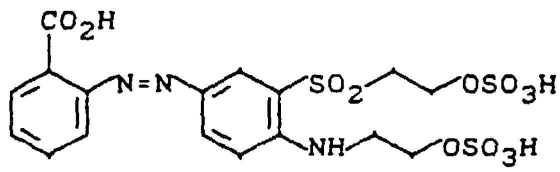

(388 nm)

Beispiel 20:

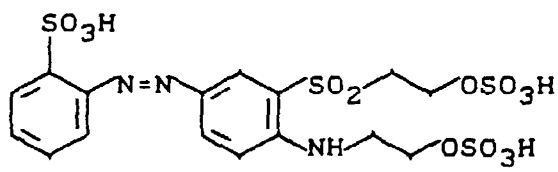

(395 nm)

Beispiel 21:

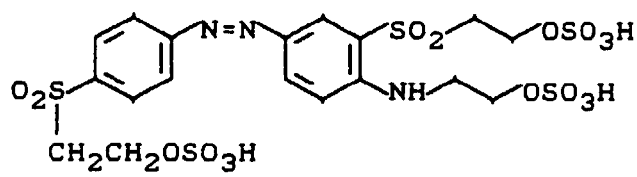

(399 nm)

Dieses bifunktionelle Reaktivfarbstoffbeispiel 21 resultiert sowohl bei Sulfatierung von Beispiel 15a wie auch von Beispiel 15b.

Zum gleichen Reaktivfarbstoff 21 gelangt man auch, wenn man Beispiel 10a oder 10b in Schwefelsäure-monohydrat einträgt, bei 20°C mit der erforderlichen Menge Kaliumperoxodisulfat versetzt, 2 Stunden bei 40°C rührt und wie beschrieben (s. Beisp.17) aufarbeitet und isoliert.

Ein ähnlich wichtiger und interessanter bifunktioneller Reaktivfarbstoff und auf analoge Weise darstellbar ist

Beispiel 22:

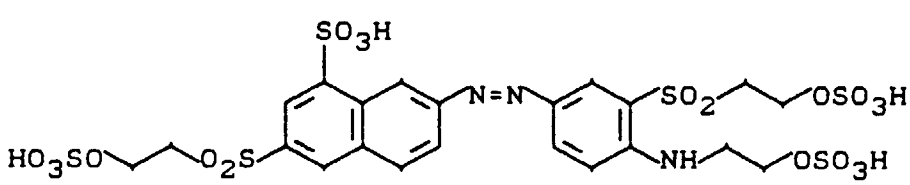

(412 nm),

dessen monofunktionelle Zwischenstufe der Struktur

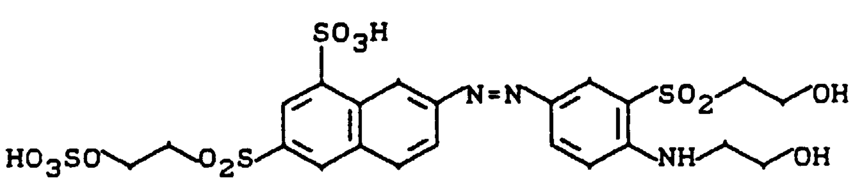

(414 nm),

Baumwolle bereits in hochechten goldgelben Farbtönen färbt.

Ersetzt man die Kupplungskomponente (Bsp. 2) der bisherigen Beispiele durch (2-Aminophenyl)(2-hydroxyethyl) sulfid (vgl. EP 137 417) oder durch (2-N-Methylaminophenyl)(2-hydroxyethyl)sulfid (Beispiel 3) und oxidiert und sulfatiert die daraus erhältlichen Azofarbstoffe analog zu den Vorschriften in Beispiel 5, 16 und 17, so werden folgende wertvolle gelbe bis goldgelbe Reaktivfarbstoffe erhalten:

Beispiel 23:

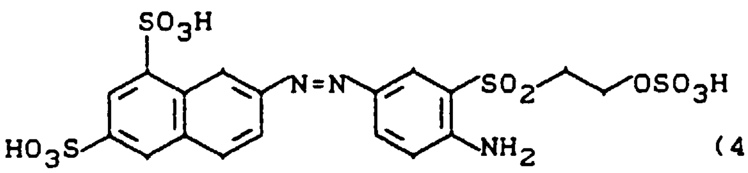

(401 nm)

Beispiel 24:

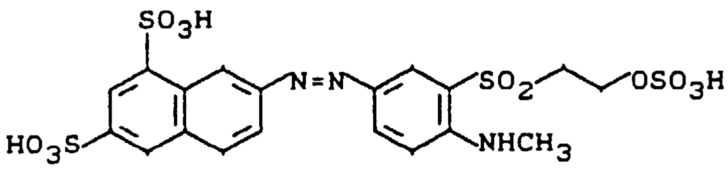

Beispiel 25:

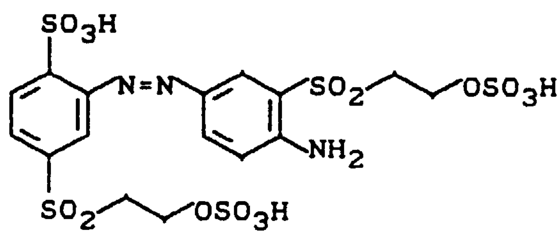

Beispiel 26:

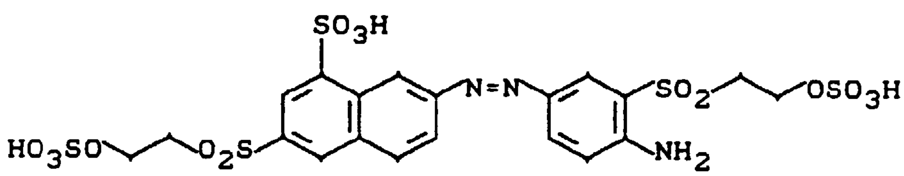

Beispiel 27:

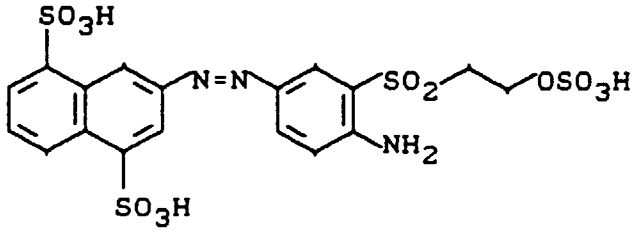

Beispiel 28:

4'-Amino-azobenzol-4-sulfonsäure wird in bekannter Weise diazotiert und auf die Komponente aus Beispiel 2 bei pH 3-5 gekuppelt. Diese Lösung des Disazofarbstoffs der Struktur

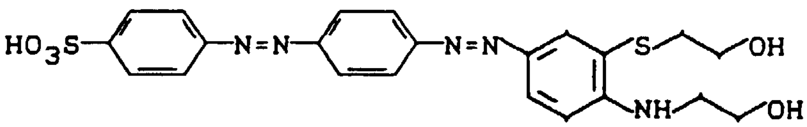

(478 nm)

wird wie in Beispiel 5 beschrieben mit Wasserstoffperoxidlösung in Gegenwart einer katalytischen Menge Natriumwolframat oxidiert. Das Sulfon der Struktur

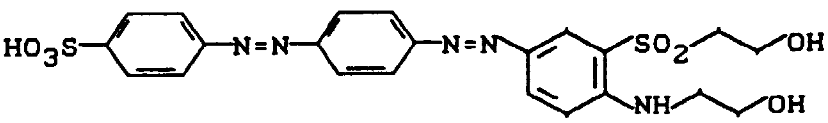

(424 nm)

wird durch Aussalzen isoliert und getrocknet. Die zweifache Sulfatierung in Analogie zu Beispiel 17 liefert einen Disazoreaktivfarbstoff, der Baumwolle oder Wolle in brillanten orangenen Farbtönen mit hohem Echtheitsniveau färbt und dem folgende Struktur zukommt:

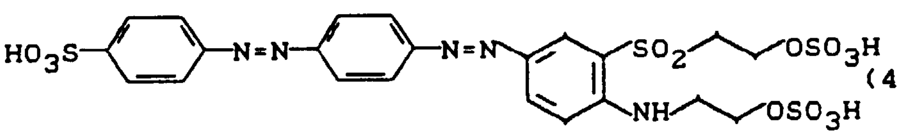

(424 nm)

Durch Variation der Diazokomponente oder Einsatz von (2-Aminophenyl)(2-hydroxyethyl)sulfid sind weitere wertvolle orangene bzw. rotstichig braune Disazoreaktivfarbstoffe der Struktur

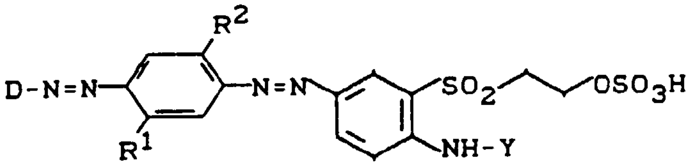

erhältlich (s. Tabelle). Als Diazokomponente eingesetzte faserreaktive Aminoazoverbindungen sind z.B. in EP-A-292 825 beschrieben.

| Besp. | D | $R^1$ | $R^2$ | Y |
|---|---|---|---|---|
| 29 | 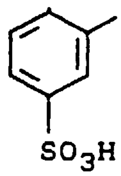 | H | H | $CH_2CH_2OSO_3H$ |
| 30 | 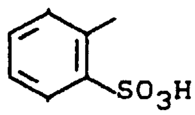 | H | H | $CH_2CH_2OSO_3H$ |
| 31 | 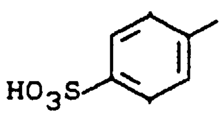 | H | $SO_3H$ | " |
| 32 | " | $CH_3$ | " | " |
| 33 | 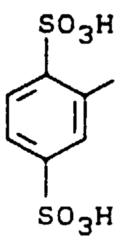 | $CH_3$ | H | $CH_2CH_2OSO_3H$ |
| 34 | " | H | H | H |
| 35 | 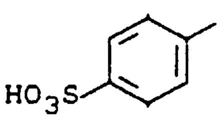 | H | $SO_3H$ | H |
| 36 | " | $CH_3$ | H | $CH_2CH_2OSO_3H$ |
| 37 | " | $OCH_3$ | H | " |
| 38 | " | $OCH_3$ | $OCH_3$ | " |
| 39 | 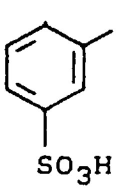 | H | $OCH_3$ | " |

| Besp. | D | $R^1$ | $R^2$ | Y |
|---|---|---|---|---|
| 40 | 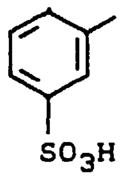 | $CH_3$ | $OCH_3$ | $CH_2CH_2OSO_3H$ |
| 41 | 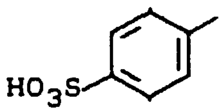 | Cl | H | " |
| 42 | " | $CH_2SO_2CH_2CH_2OSO_3H$ | H | " |
| 43 | " | $NHCOCH_3$ | H | " |
| 44 | " | $NHCOCH_3$ | $OCH_3$ | " |
| 45 | " | $NHCONH_2$ | H | " |
| 46 | 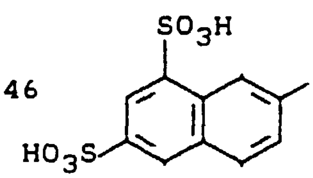 | $CH_3$ | H | $CH_2CH_2OSO_3H$ |
| 47 | 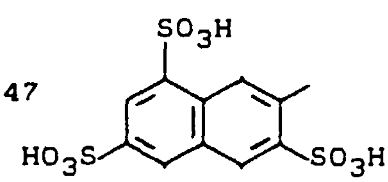 | H | H | H |
| 48 | 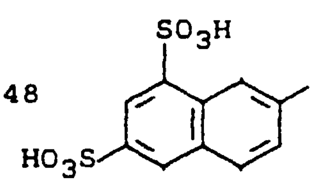 | $NHCOCH_3$ | H | $CH_2CH_2OSO_3H$ |

| Besp. | D | $R^1$ | $R^2$ | Y |
|---|---|---|---|---|
| 49 | 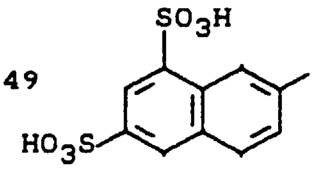 | $NHCOCH_3$ | $OCH_3$ | $CH_2CH_2OSO_3H$ |
| 50 | 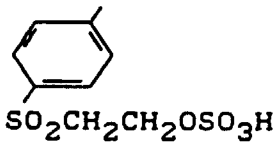 | $CH_3$ | $SO_3H$ | " |
| 51 | 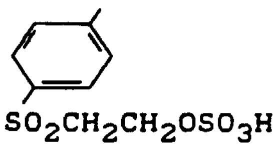 | $NHCOCH_3$ | $SO_3H$ | " |
| 52 | 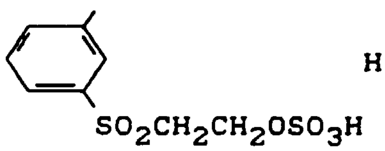 | H | $SO_3H$ | " |
| 53 | 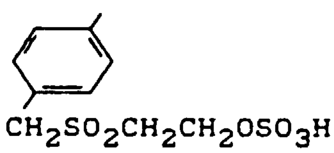 | $CH_3$ | $SO_3H$ | " |
| 54 | 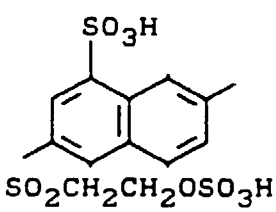 | $CH_3$ | $SO_3H$ | " |
| 55 | " | H | $SO_3H$ | " |

| Besp. | D | $R^1$ | $R^2$ | Y |
|---|---|---|---|---|
| 56 | 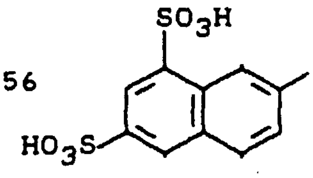 | H | $SO_2CH_2CH_2OSO_3H$ | $CH_2CH_2OSO_3H$ |
| 57 | 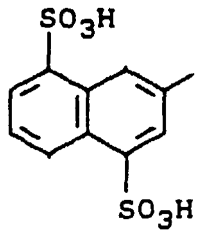 | H | " | " |
| 58 | 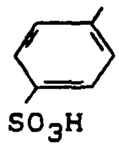 | H | " | " |
| 59 | 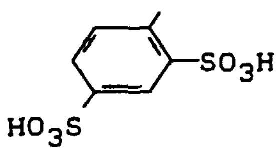 | H | " | " |
| 60 | " | $NHCONH_2$ | H | " |

Verbindung 56 ist herstellbar, indem man den Farbstoff des Beispiels 23 oder dessen nicht sulfatierte Vorstufe diazotiert, auf die Komponente aus Beispiel 2 kuppelt, oxidiert und sulfatiert. Oder aber man diazotiert die Thiovorstufe der Struktur

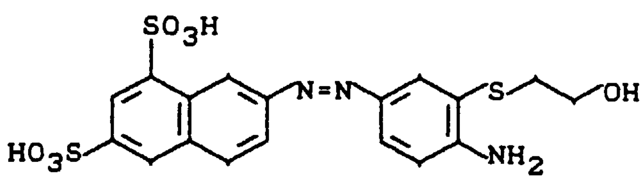

kuppelt auf Verbindung gemäß Beispiel 2 und oxidiert und sulfatiert beide Hydroxyethylmercapto-Reste des Disazofarbstoffes. Die obige Thiovorstufe erhält man auch, wenn man auf [2-(N-Sulfomethyl)aminophenyl](2-hydroxyethyl) sulfid kuppelt und anschließend die ω-Methansäuregruppierung alkalisch verseift.

Durch Variation der Mittelkomponente sind weitere wertvolle Disazoreaktivkomponenten erhältlich, wie z.B.

Beispiel 61:

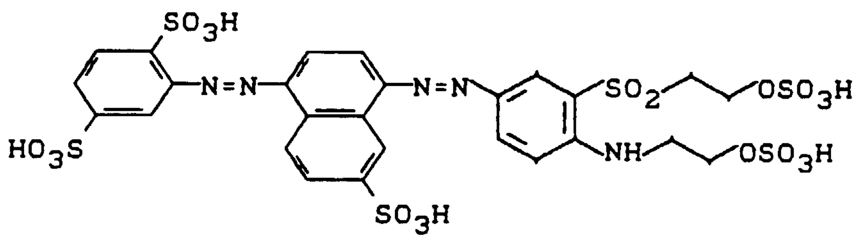

Beispiel 62:

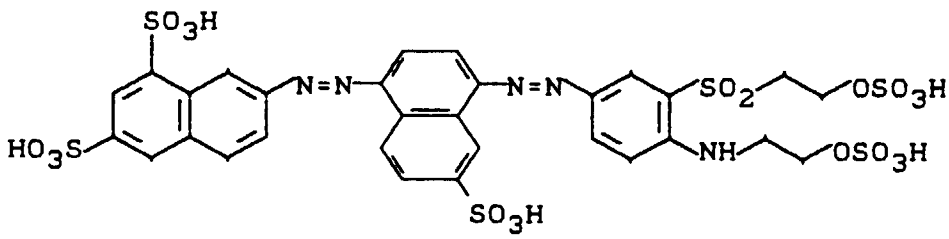

Beispiel 63:

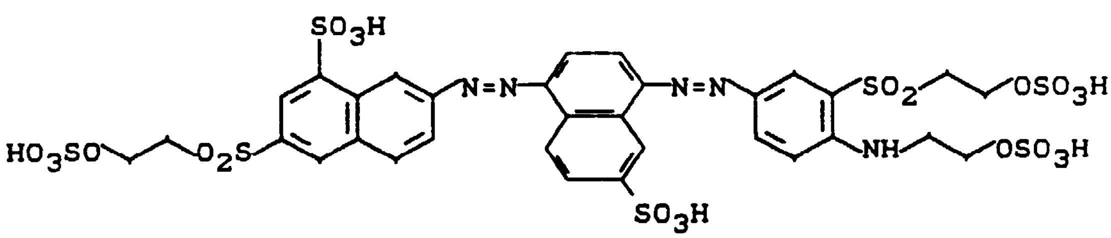

Beispiel 64:

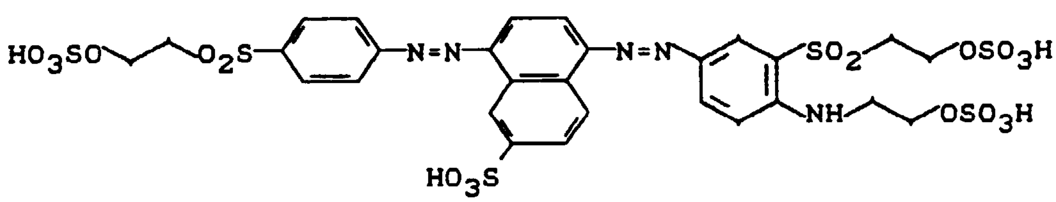

Beispiel 65:

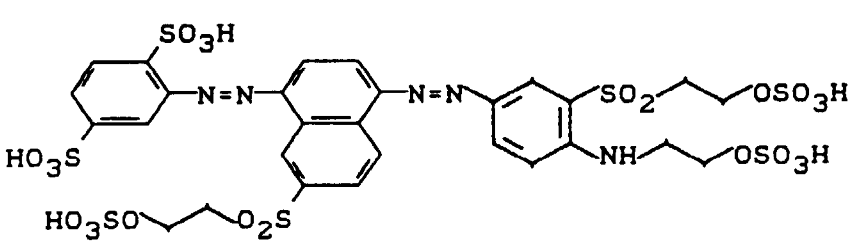

Beispiel 66:

Die Farbbase der Struktur

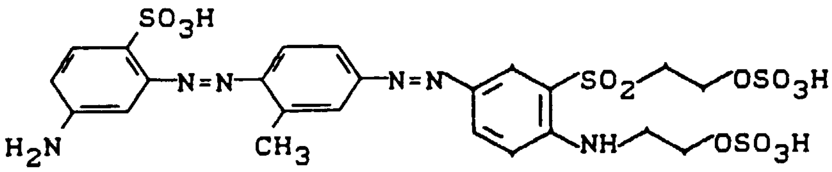

die durch Diazotieren von 5-Acetylamino-2-aminobenzolsulfonsäure, Kuppeln auf m-Toluidin, Diazotieren der Aminoazoverbindung, Kuppeln auf die Komponente aus Beispiel 2, Wasserstoffperoxidoxidation, Verseifung der N-Acetylgruppierung und Sulfatierung der Hydroxyethylgruppierungen hergestellt werden kann, wird in Wasser bei pH 6,5 angerührt und mit einem 1,2-fachen äquimolaren Überschuß an 5-Chlor-2,4,6-trifluorpyrimidin umgesetzt. Durch Zugabe von Sodalösung hält man den pH-Wert dabei konstant bei 6-7. Nach Reaktionsende wird der Feststoff der Struktur

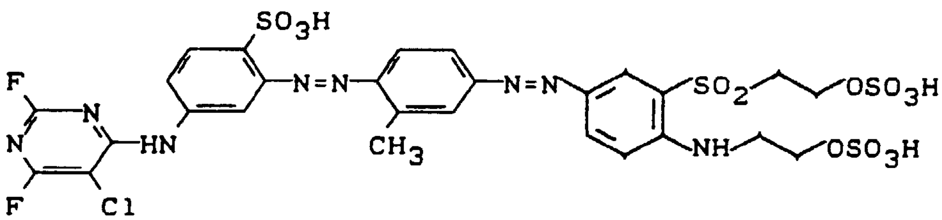

ausgesalzen, durch Abnutschen isoliert und getrocknet. Er färbt Baumwolle in rotstichig gelben Nuancen. Nach dieser Verfahrensvariante sind weitere interessante bifunktionelle Reaktivfarbstoffe erhältlich.

Beispiel 67:

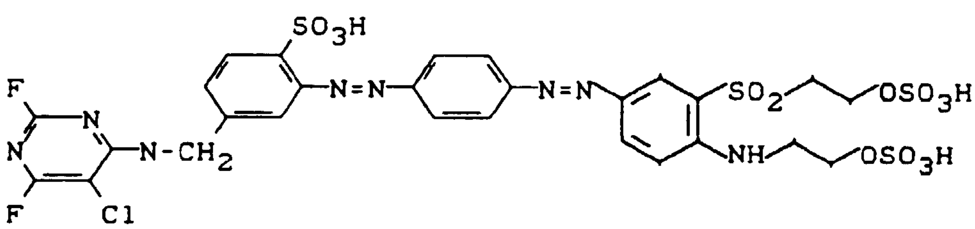

Beispiel 68:

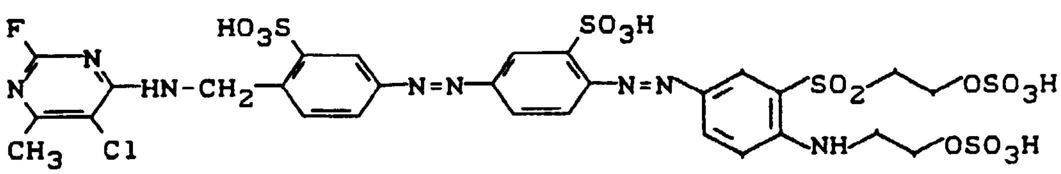

Beispiel 69:

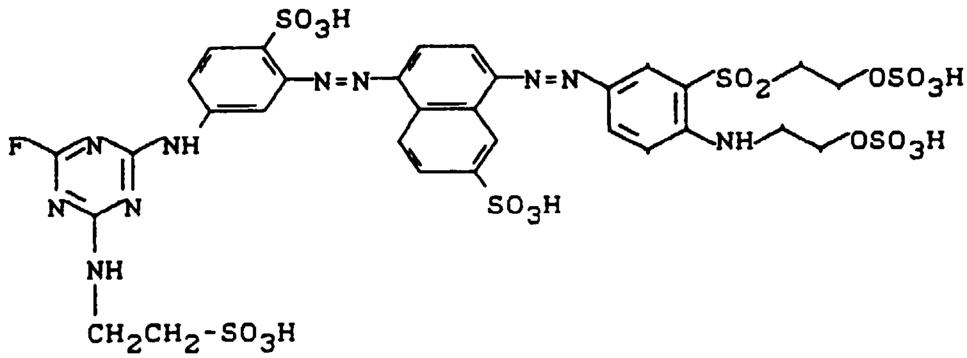

Beispiel 70:

2-Amino-5-aminomethyl-1-naphthalinsulfonsäure wird in üblicher Weise diazotiert und wie in Beispiel 3 auf die Kupplungskomponente aus Beispiel 2 gekuppelt. Nach Oxidation und Sulfatierung der Monoazoverbindung wird bei pH 7-8 mit äquimolarer Menge an 5-Chlor-4,6-difluorpyrimidin kondensiert. Die freigesetzte Fluorwasserstoffsäure wird kontinuierlich durch Sodazugabe neutralisiert. Der Farbstoff wird ausgesalzen, abgesaugt und getrocknet. Er färbt Baumwolle in klaren gelben Tönen und besitzt die Struktur

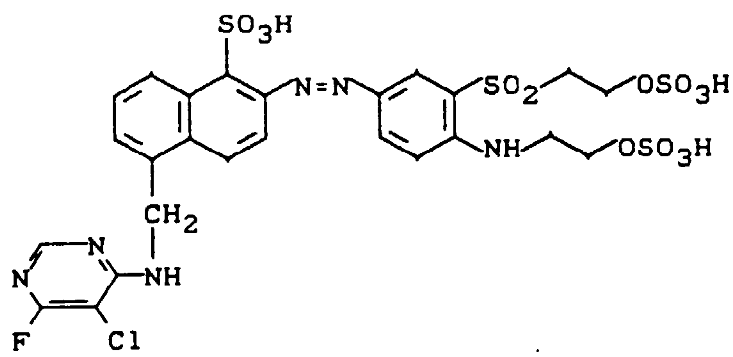

Weitere wichtige und interessante bifunktionelle Farbstoffe, die analog zu Beispiel 21 darstellbar sind, sind folgende:

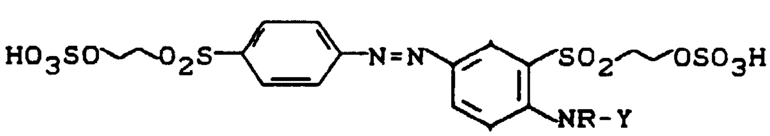

| Beispiel | R | Y |
|---|---|---|
| 71 | H | $CH_2CH_2SO_3H$ |
| 72 | H | $CH_2-SO_3H$ |
| 73 | H | $CH_2-CO_2H$ |
| 74 | H | $CH_2CH_2CO_2H$ |
| 75 | H | $CH_2CH_2CH_2CO_2H$ |
| 76 | $CH_2CO_2H$ | $CH_2CO_2H$ |
| 77 | H | $CH(CO_2H)-CH_2CO_2H$ |
| 78 | H | 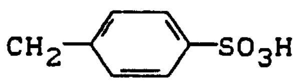 |
| 79 | H | 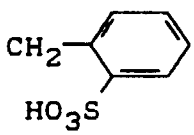 |
| 80 | H | $CH_2CH_2SO_2CH_2CH_2OSO_3H$ |
| 81 | $CH_2CO_2H$ | " |
| 82 | $CH_2CH_2SO_3H$ | " |

| Beispiel | R | Y |
|---|---|---|
| 83 | $CH_3$ | $CH_2CH_2OSO_3H$ |
| 84 | $CH_2CO_2H$ | $CH_2CH_2OSO_3H$ |
| 85 | $C_2H_5$ | $CH_2CH_2OSO_3H$ |
| 86 | 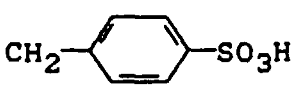 | $CH_2CH_2OSO_3H$ |
| 87 | $CH_2CH_2CO_2H$ | $CH_2CH_2CO_2H$ |
| 88 | $CH_2CH_2CO_2H$ | $CH_2CH_2OSO_3H$ |

In Analogie zu Beispiel 17 beziehungsweise 28 sind bei Variation der Reste R und Y in der Kupplungskomponente folgende wichtige interessante Farbstoffe darstellbar:

Beispiel 89:

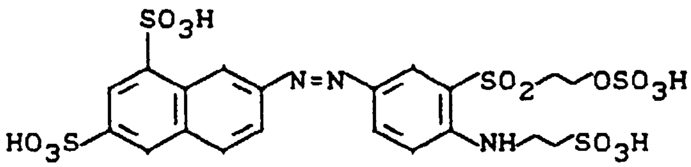

Beispiel 90:

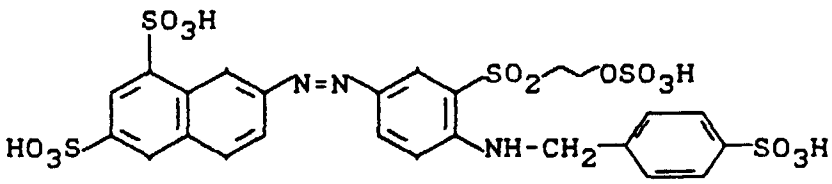

Beispiel 91:

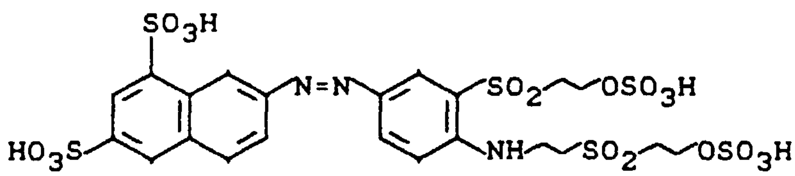

Beispiel 92:

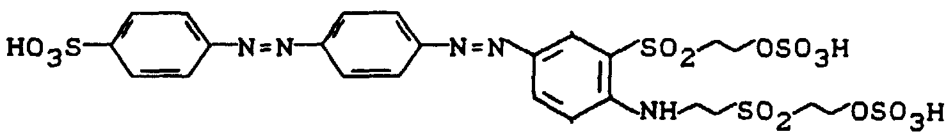

Beispiel 93:

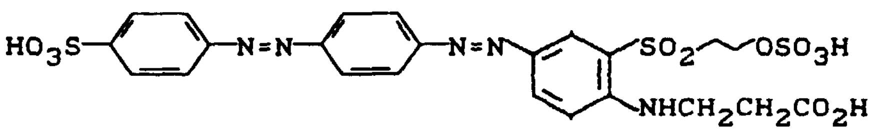

Beispiel 94:

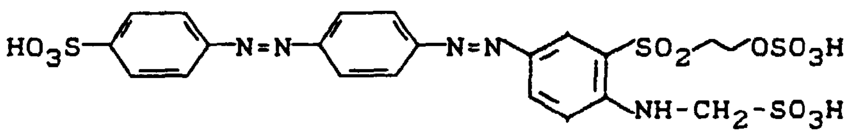

Färbevorschrift 1

2 Teile des gemäß Beispiel 28 erhältlichen Farbstoffes werden in 100 ml Wasser gelöst. Die Lösung gibt man zu 1900 Teilen kaltem Wasser, fügt 60 Teile Natriumchlorid zu und geht mit 100 Teilen eines Baumwollgewebes in dieses Färbebad ein.

Man steigert die Temperatur auf 60°C, wobei nach 30 Minuten 40 Teile kalzinierte Soda und nochmals 60 Teile Natriumchlorid zugegeben werden. Man hält die Temperatur 30 Minuten auf 60°C, spült und seift dann die Färbung während 15 Minuten in einer 0,3Xigen kochenden Lösung eines ionenfreien Waschmittels, spült und trocknet. Man erhält eine goldgelbe Färbung mit guten Echtheitseigenschaften.

Färbevorschrift 2

4 Teile des in Beispiel 22 hergestellten Reaktivfarbstoffes werden in 50 Teilen Wasser gelöst. Dazu gibt man 50 Teile einer Lösung, die pro Liter 5 g Natriumhydroxyd und 10 g kalziniertes Soda enthält. Mit der erhaltenen Lösung wird ein Baumwollgewebe foulardiert, so daß es um 70 % seines Gewichtes zunimmt, und dann auf eine Kaule aufgewickelt. Das Baumwollgewebe wird so während 3 bis 12 Stunden bei Raumtemperatur gelagert. Danach wird die gefärbte Ware gespült, während einer Viertelstunde mit einem nichtionogenen Waschmittel kochend geseift, nochmals gespült und getrocknet. Man erhält eine gelbe Färbung mit guten Echtheitseigenschaften.

Tiefschwarze Färbungen werden erhalten, wenn man geeignete Mischungen von Farbstoffbeispiel 22 mit C.I. Reactive Black 5 einsetzt.

**Patentansprüche**

1. Verfahren zur Herstellung wasserlöslicher Reaktivfarbstoffe der Struktur (1)

$$[A](SO_2X)_{1\ oder\ 2} \qquad (1)$$

worin

A = chromophorer Rest aus der Azo-, Polyazo, Anthrachinon-, Formazan- oder Triphendioxazin-Reihe

X = $CH{=}CH_2$ oder $CH_2CH_2OSO_3H$, dadurch gekennzeichnet, daß man Mercaptoverbindungen der Struktur

$$[A](S\text{-}CH_2\text{-}CH_2\text{-}OH)_{1\ oder\ 2}$$

oxidiert und sulfatiert sowie gegebenenfalls den Sulfatoethylsulfonyl-Rest mit Basen in den Vinylsulfonylrest überführt.

2. Neue faserreaktive Mono- und Disazofarbstoffe der Struktur

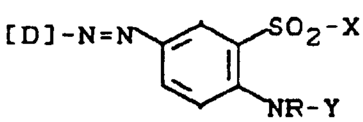

(1a)

worin

D = Rest einer Diazokomponente aus der Benzol- oder Naphthalinreihe, der substituiert sein kann, ausgenommen durch OH, $NH_2$, Monoalkyl-und Dialkylamino oder Arylamino

X = $CH{=}CH_2$ oder $CH_2CH_2OSO_3H$ und

Y = H, $C_1$-$C_6$-Alkyl, mit Cl, OH, CN, $CO_2H$, $OSO_3H$, $SO_3H$, $SO_2X$ oder $C_1$-$C_4$-Alkoxy substituiertes $C_1$-$C_6$-Alkyl, Allyl, Cycloalkyl, mit $CO_2H$, $OSO_3H$ oder $SO_3H$ substituiertes Cycloalkyl, Benzyl oder mit OH, $CO_2H$ oder $SO_3H$ substituiertes Benzyl.

R = H, $C_1$-$C_4$-Alkyl, mit Cl, OH, CN, $CO_2H$, $OSO_3H$, $SO_3H$, $SO_2X$ oder $C_1$-$C_4$-Alkoxy substituiertes $C_1$-$C_4$-Alkyl, Allyl, Benzyl oder mit OH, $CO_2H$ beziehungsweise Sulfo substituiertes Benzyl, wobei

die Gruppierung NR-Y auch für einen gesättigten N-Heterocyclus stehen kann.

**3.** Reaktivfarbstoffe gemäß Anspruch 2 der Formeln

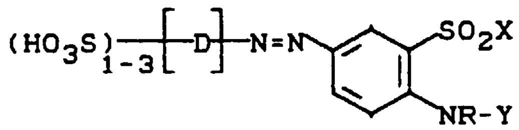

(2)

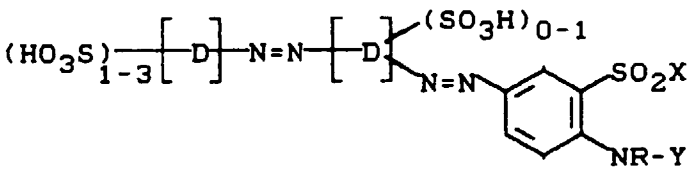

(3)

worin

D = Phenylen- oder Naphthylenrest, der zusätzlich mit Carboxy, $C_1$-$C_4$-Alkyl, $C_1$-$C_4$-Alkoxy, Phenoxy, Halogen, $C_1$-$C_4$-Alkylsulfonyl, $SO_2X$ oder einem faserreaktiven heterocyclischen Pyrimidin-oder Triazinreaktivrest substituiert sein kann und wobei in Formel (3) die Bedeutungen für beide Gruppen -D- gleich oder verschieden sein können.

**4.** Reaktivfarbstoffe gemäß Anspruch 2 der Formeln

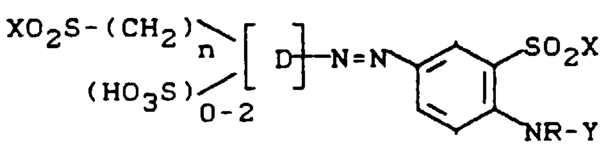

(4)

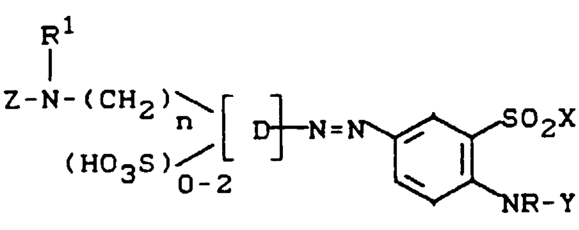

(5)

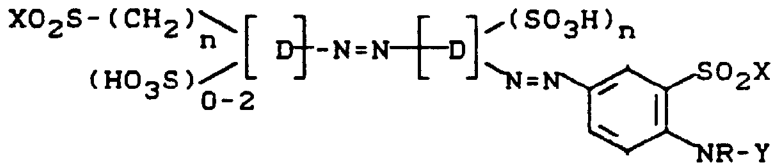

(6)

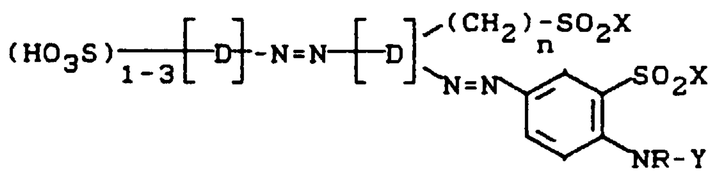

(7)

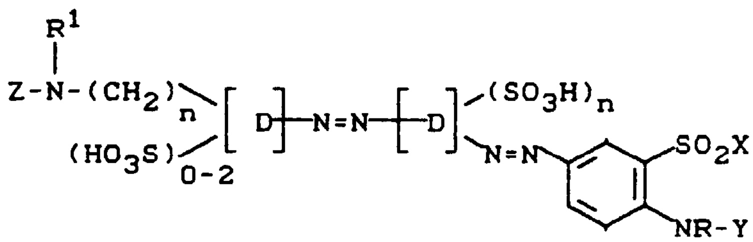

(8)

worin

| | |
|---|---|
| n = | 0 oder 1 |
| $R^1$ = | H oder $C_1$-$C_4$-Alkyl, |
| Z = | faserreaktiver halogenhaltiger Rest aus der Triazin- oder Pyrimidinreihe sowie |
| D = | Phenylen oder Naphthylenrest, der zusätzlich mit Carboxy, Methyl, Ethyl, Methoxy, Ethoxy, Chlor, Brom oder Fluor substituiert sein kann, wobei die Bedeutung für beide Gruppen D in Formel, (6) (7) und (8) gleich oder verschieden sein kann, und worin |
| R, X und Y | die in Anspruch 2 genannte Bedeutung haben. |

**5.** Reaktivfarbstoffe gemäß Anspruch 2 der Formeln

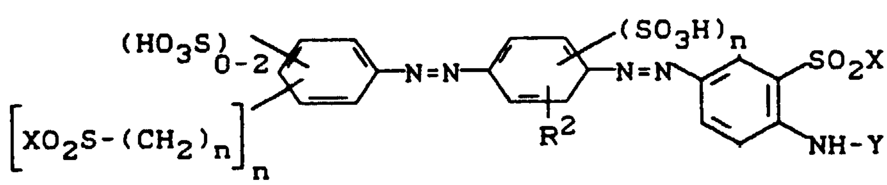

(9)

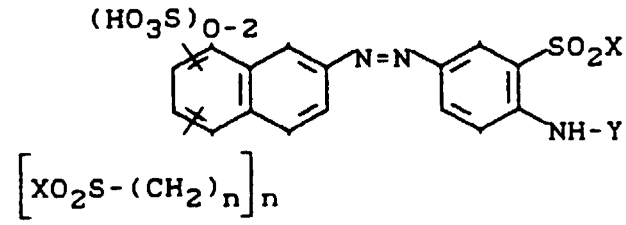

(10)

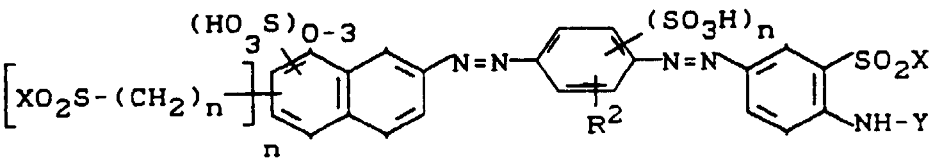

(11)

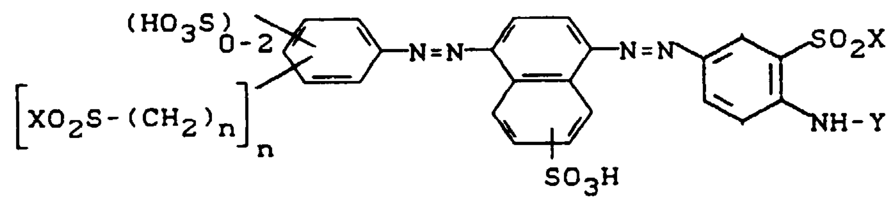

(12)

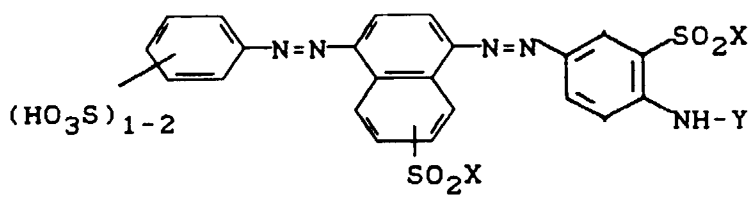

(13)

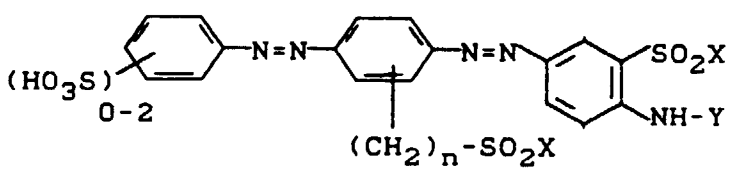

(14)

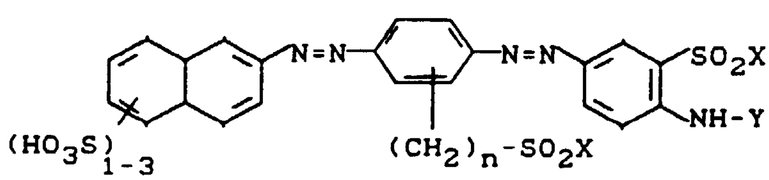

(15)

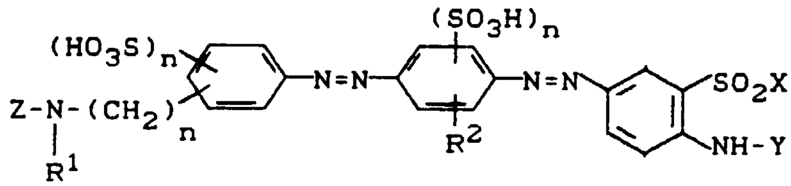

(16)

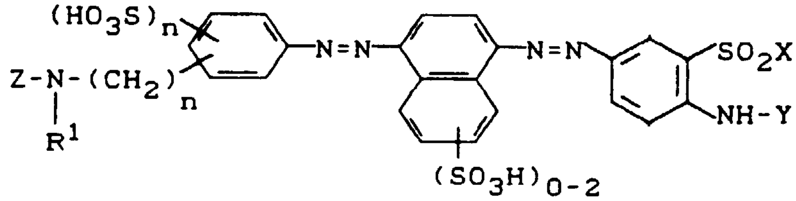

(17)

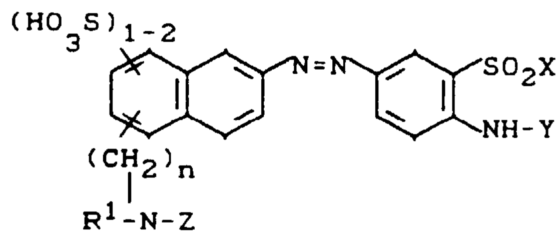

(18a)

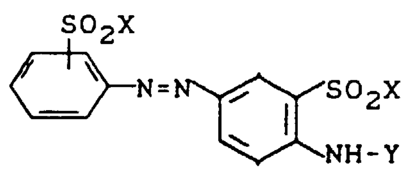

(18b)

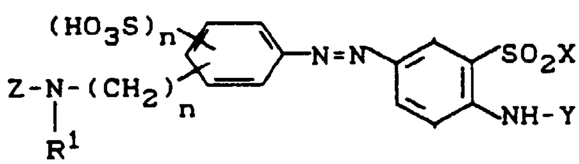

(19)

worin

$R^2$ = H, $CH_3$, $OCH_3$, Cl oder $CH_2SO_2X$ und die übrigen Substituenten die in Anspruch 4 genannte Bedeutung haben.

**6.** Verfahren zur Herstellung von Reaktivfarbstoffen gemäß Anspruch 2 dadurch gekennzeichnet, daß man Thioverbindungen der Struktur (32)

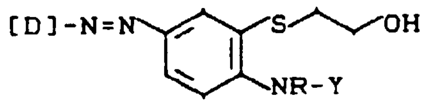

(32)

worin

Y = die in Anspruch 2 genannte Bedeutung, insbesondere $CH_2CH_2OH$, und

D und R die in Anspruch 2 genannte Bedeutung haben, zu Sulfonen der Struktur (33) aufoxidiert

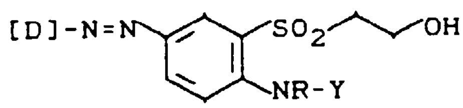

(33)

und diese zu (1) mit X = $CH_2CH_2OSO_3H$ sulfatiert oder indem man die Reaktionsschritte, Sulfatierung und Oxidation gleichzeitig durchführt.

**7.** Verfahren zum Färben und Bedrucken von hydroxyl- und/oder amidgruppenhaltigen Materialien, mit einem Reaktivfarbstoff, dadurch gekennzeichnet, daß man einen Farbstoff gemäß Anspruch 2 verwendet.

**8.** Verbindung der Formel

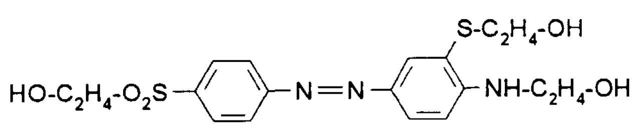

**9.** Verbindung der Formel

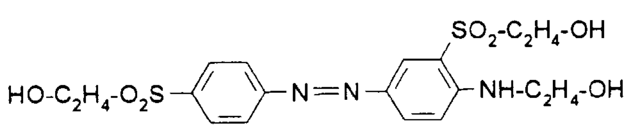

## Claims

**1.** Process for the preparation of water-soluble reactive dyes of structure (1):

$$\{A\}(SO_2X)_{1 \text{ or } 2} \qquad (1)$$

wherein

A = a chromophoric radical from the azo, polyazo, anthraquinone, formazan or triphendioxazine series, and

X = $CH{=}CH_2$ or $CH_2CH_2OSO_3H$,

characterised in that mercapto compounds of the structure

$$[A]-(S-CH_2-CH_2-OH)_{1\ \mathrm{or}\ 2}$$

are oxidised and sulphated and, if appropriate, the sulphatoethylsulphonyl radical is converted to the vinylsulphonyl radical with bases.

**2.** Novel fibre-reactive monoazo and disazo dyes of the structure

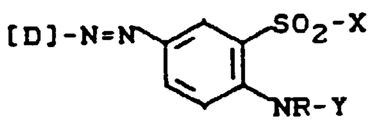

(1a)

wherein

D = a radical of a diazo component from the benzene or naphthalene series which can be substituted, except by OH, $NH_2$, monoalkylamino and dialkylamino, or arylamino,

X = $CH{=}CH_2$ or $CH_2CH_2OSO_3H$ and

Y = H, $C_1$-$C_6$-alkyl, $C_1$-$C_6$-alkyl which is substituted by Cl, OH, CN, $CO_2H$, $OSO_3H$, $SO_3H$, $SO_2X$ or $C_1$-$C_4$-alkoxy, allyl, cycloalkyl, cycloalkyl which is substituted by $CO_2H$, $OSO_3H$ or $SO_3H$, benzyl or benzyl which is substituted by OH, $CO_2H$ or $SO_3H$.

R = H, $C_1$-$C_4$-alkyl, $C_1$-$C_4$-alkyl which is substituted by Cl, OH, CN, $CO_2H$, $OSO_3H$, $SO_3H$, $SO_2X$ or $C_1$-$C_4$-alkoxy, allyl, benzyl or benzyl which is substituted by OH, $CO_2H$ or sulpho,

it being possible for the group NR-Y also to represent a saturated N-heterocycle.

**3.** Reactive dyes according to Claim 2 of the formulae

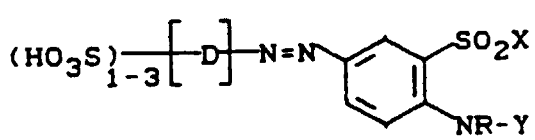

(2)

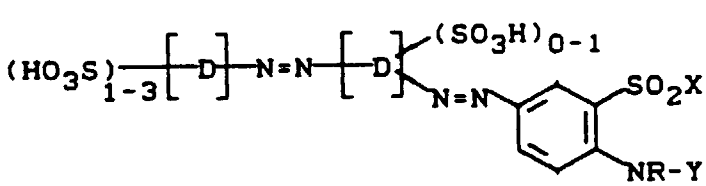

(3)

wherein

D = a phenylene or naphthylene radical which can additionally be substituted by carboxyl, $C_1$-$C_4$-alkyl, $C_1$-$C_4$-alkoxy, phenoxy, halogen, $C_1$-$C_4$-alkylsulphonyl, $SO_2X$ or a fibre-reactive heterocyclic pyrimidine- or triazine-reactive radical, it being possible for the meanings of both groups -D- in formula (3) to be identical or different.

**4.** Reactive dyes according to Claim 2 of the formulae

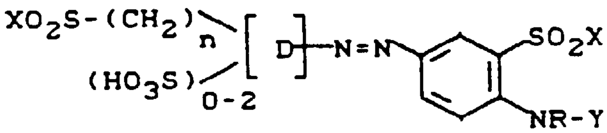

(4)

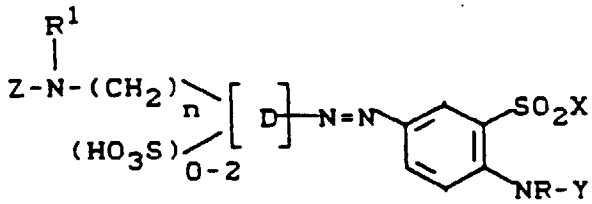

(5)

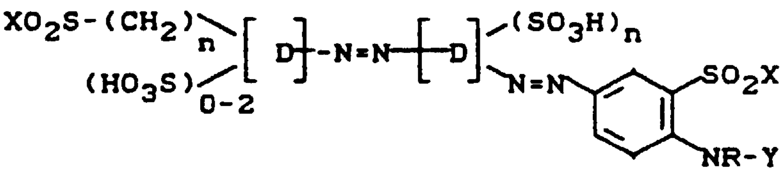

(6)

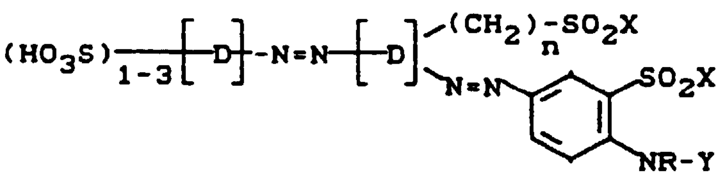

(7)

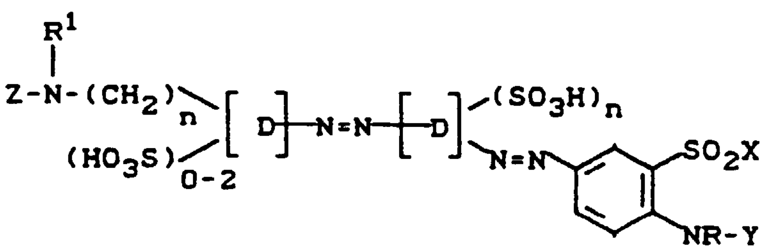

(8)

wherein

n = 0 or 1,

$R^1$ = H or $C_1$-$C_4$-alkyl,

Z = a fibre-reactive halogen-containing radical from the triazine or pyrimidine series,

D = a phenylene or naphthylene radical which can additionally be substituted by carboxyl, methyl, ethyl, methoxy, ethoxy, chlorine, bromine or fluorine, it being possible for the meanings of both groups D

in formulae (6), (7) and (8) to be identical or different, and

R, X and Y are as defined in Claim 2.

**5.** Reactive dyes according to Claim 2 of the formulae

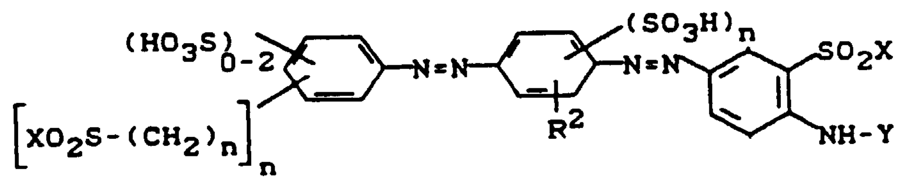

(9)

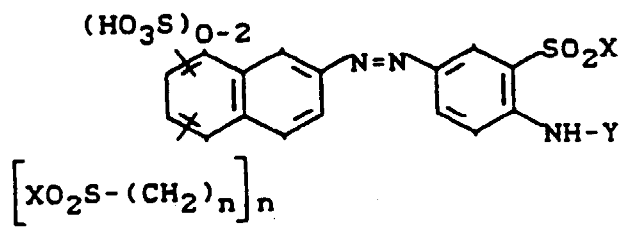

(10)

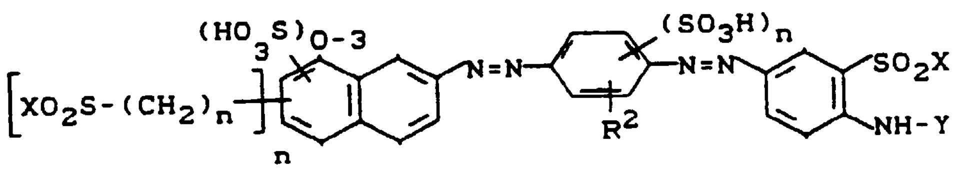

(11)

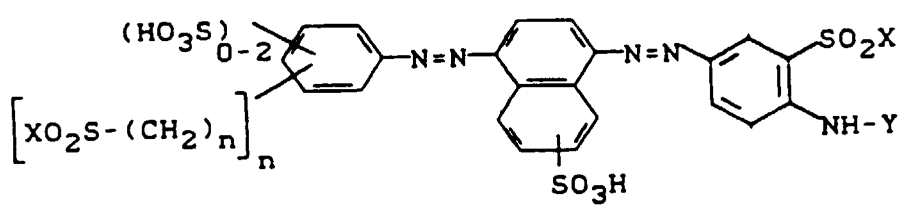

(12)

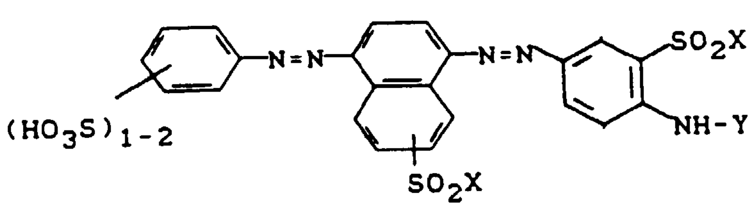

(13)

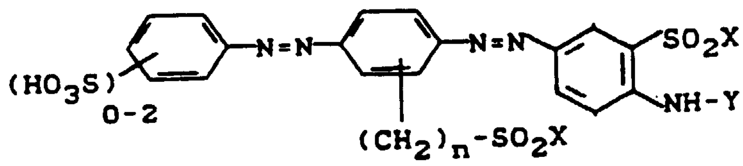

(14)

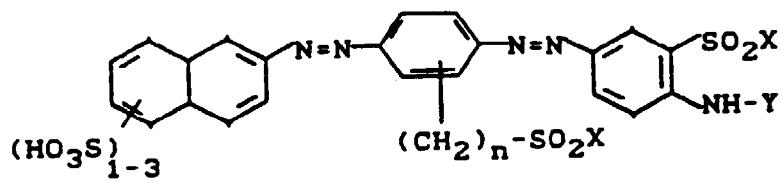

(15)

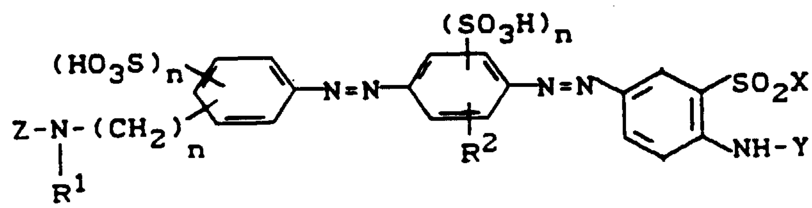

(16)

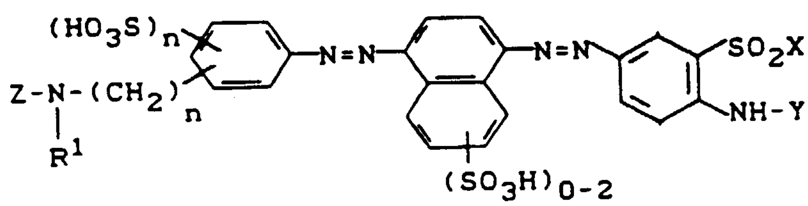

(17)

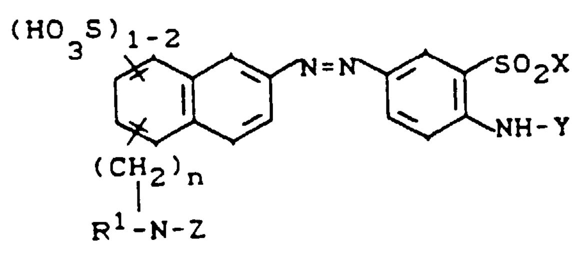

(18a)

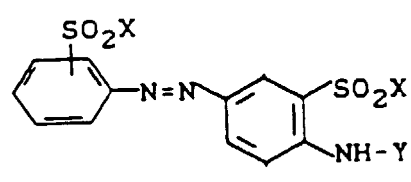

(18b)

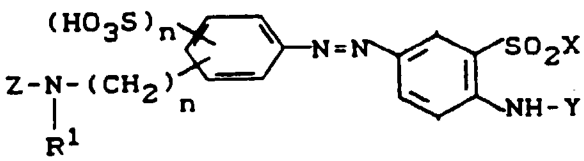

(19)

wherein

$R^2$ = H, $CH_3$, $OCH_3$, Cl or $CH_2SO_2X$ and the other substituents are as defined in Claim 4.

**6.** Process for the preparation of reactive dyes according to Claim 2, characterised in that thio compounds of structure (32):

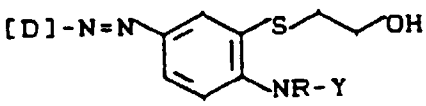

(32),

wherein

Y = the meaning mentioned in Claim 2, in particular $CH_2CH_2OH$ and

D and R are as defined in Claim 2,

are oxidised to sulphones of structure (33):

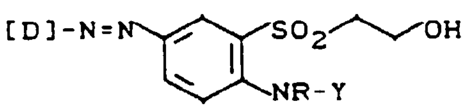

(33)

and these are sulphated to give (1) in which X = $CH_2CH_2OSO_3H$, or in that the reaction steps of sulphation and oxidation are carried out simultaneously.

**7.** Process for the dyeing and printing of materials containing hydroxyl and/or amide groups with a reactive dye, characterised in that a dye according to Claim 2 is used.

**8.** Compound of the formula

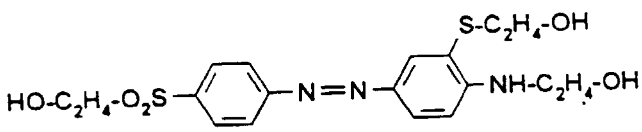

**9.** Compound of the formula

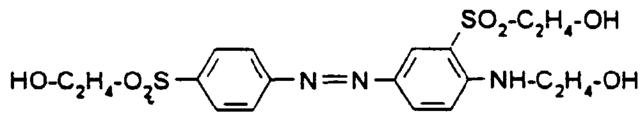

## Revendications

1. Procédé préparation de colorants réactifs solubles dans l'eau, de structure (1)

$$[A]-(SO_2X)_{1\ ou\ 2} \qquad (1)$$

dans laquelle

A represente un radical chromophore de la série azoïque, polyazoïque, anthraquinonique, formazanique ou triphénodioxazinique,
X représente $CH{=}CH_2$ ou $CH_2CH_2OSO_3H$,

caractérisé en ce que l'on oxyde et sulfate des mercaptans de structure

$$[A]-(S\text{-}CH_2\text{-}CH_2\text{-}OH)_{1\ ou\ 2}$$

et le cas échéant, on convertit le groupe sulfatoéthylsulfonyle, à l'aide de bases, en le groupe vinylsulfonyle.

2. Nouveaux colorants mono- et dis-azoïques réactifs avec les fibres, de structure

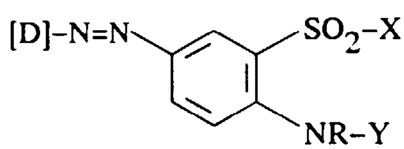

(1a)

dans laquelle

D représente le radical d'un composant diazotable de la série benzénique ou naphtalénique, qui peut être substitué, sauf par des groupes OH, $NH_2$, mono- et di-alkylamino ou arylamino,
X représente $CH{=}CH_2$ ou $CH_2CH_2OSO_3H$ et
Y représente H, un groupe alkyle en $C_1$-$C_6$, un groupe alkyle en $C_1$-$C_6$ portant des substituants Cl, OH, CN, $CO_2H$, $OSO_3H$, $SO_3H$, $SO_2X$ ou alcoxy en $C_1$-$C_4$, un groupe allyle, cycloalkyle, cycloalkyle substitué par $CO_2H$, $OSO_3H$ ou $SO_3H$, benzyle ou benzyle substitué par OH, $CO_2H$ ou $SO_3H$,
R représente H, un groupe alkyle en $C_1$-$C_4$, un groupe alkyle en $C_1$-$C_4$ portant des substituants Cl, OH, CN, $CO_2H$, $OSO_3H$, $SO_3H$, $SO_2X$ ou alcoxy en $C_1$-$C_4$, un groupe allyle, benzyle ou benzyle substitué par OH, $CO_2H$ ou sulfo, le groupement NR-Y pouvant également représenter un hétérocycle azoté saturé.

3. Colorants réactifs selon la revendication 2, de formules

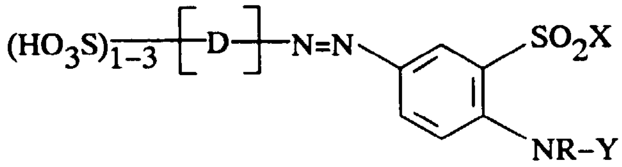

(2)

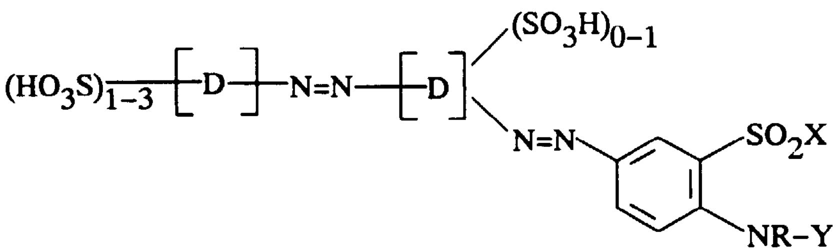

(3)

dans lesquelles

D représente un radical phénylène ou naphtylène qui peut en outre être substitué par des groupes carboxy, alkyle en $C_1$-$C_4$, alcoxy en $C_1$-$C_4$, phénoxy, des halogènes, des groupes alkylsulfonyle en $C_1$-$C_4$, $SO_2X$ ou un radical hétérocyclique de pyrimidine ou de triazine réactif avec les fibres, les deux groupes D de la formule (3) pouvant être identiques ou différents.

**4.** Colorants réactifs selon la revendication 2, de formules

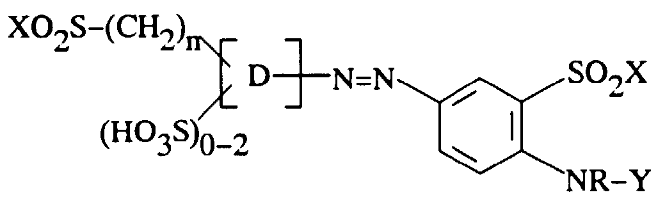

(4)

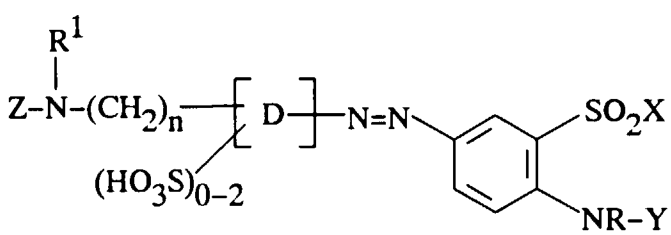

(5)

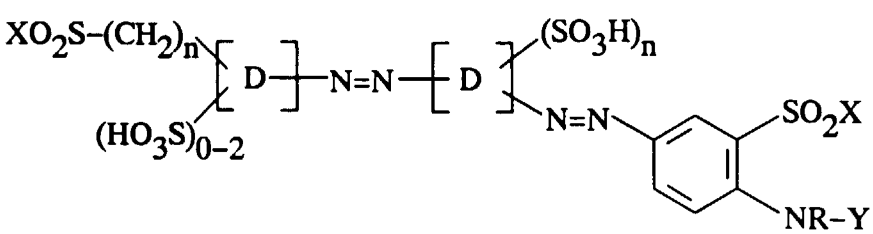

(6)

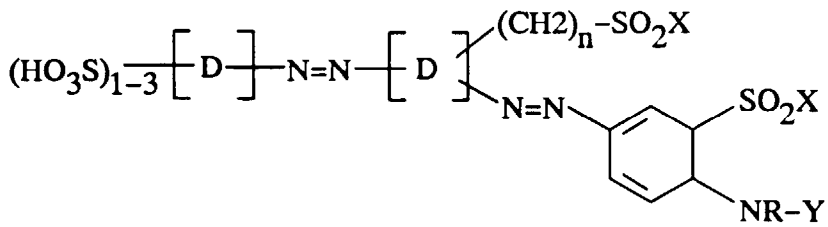

(7)

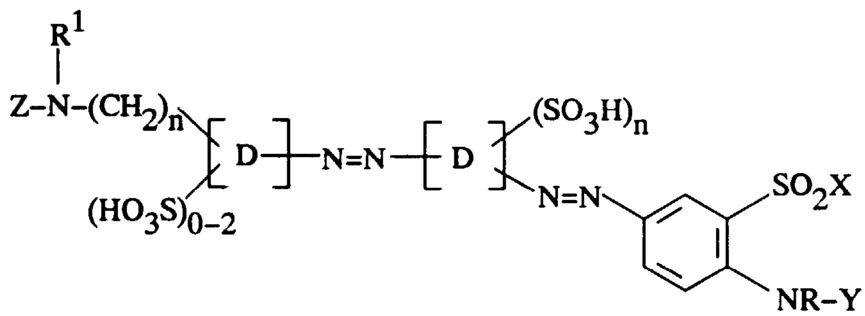

(8)

dans lesquelles

n = 0 ou 1,
$R^1$ = H ou alkyle en $C_1$-$C_4$,
Z = radical halogéné réactif avec les fibres, de la série triazinique ou pyrimidinique,
D = radical phénylène ou naphtylène qui peut encore être substitué par des groupes carboxy, méthyle, éthyle, méthoxy, éthoxy, le chlore, le brome ou le fluor, les deux groupes D des formules (6), (7) et (8) pouvant être identiques ou différents,
R, X et Y ayant les significations indiquées dans la revendication 2.

**5.** Colorants réactifs selon la revendication 2, de formules

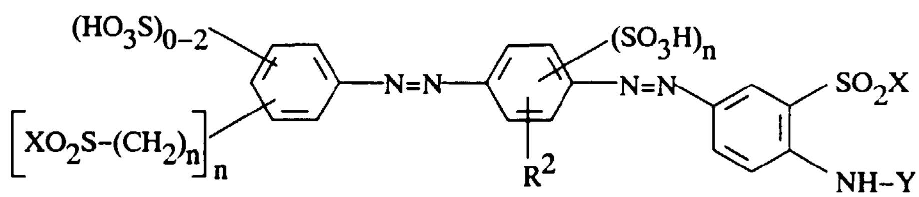

(9)

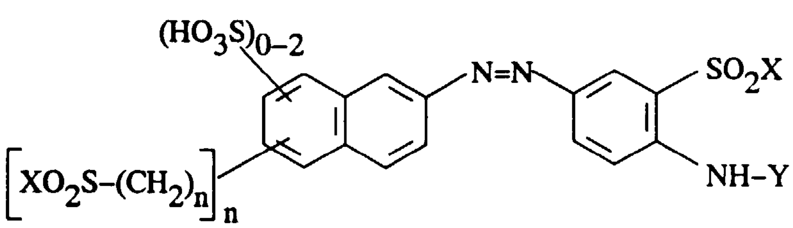

(10)

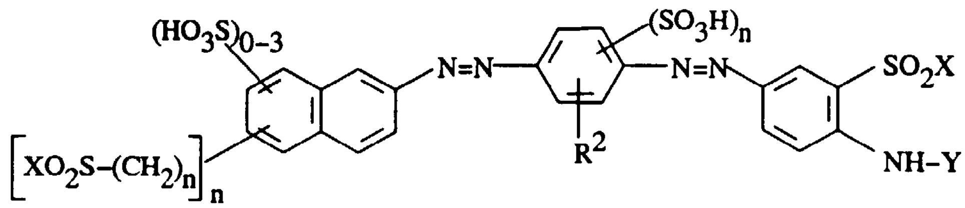
(11)

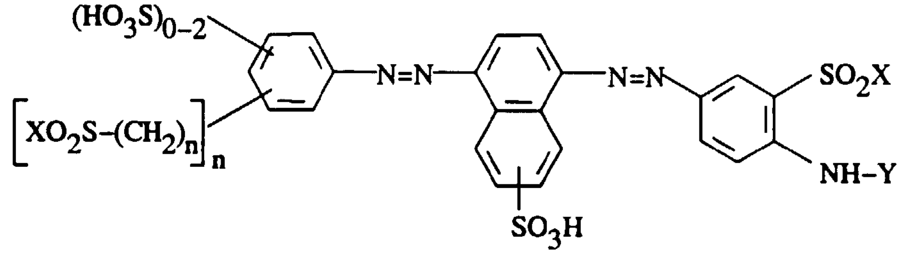
(12)

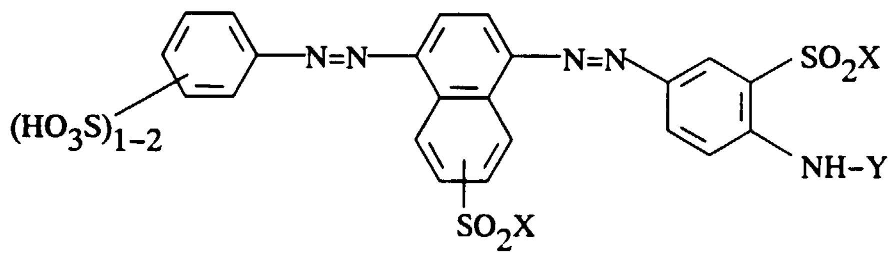
(13)

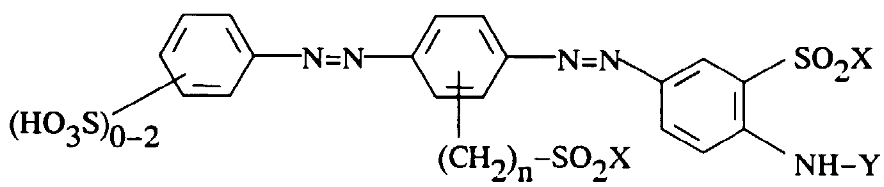
(14)

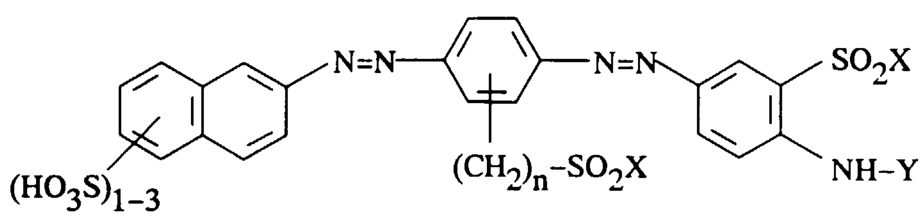
(15)

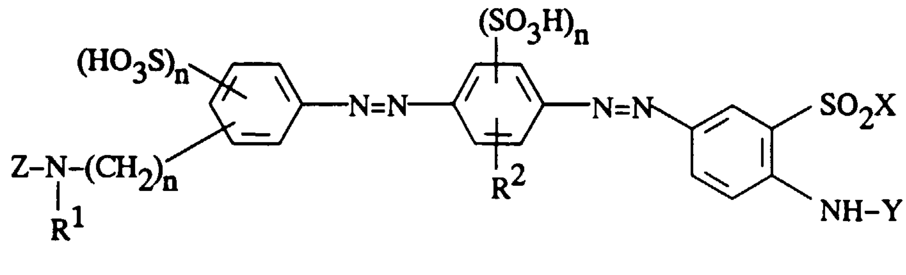
(16)

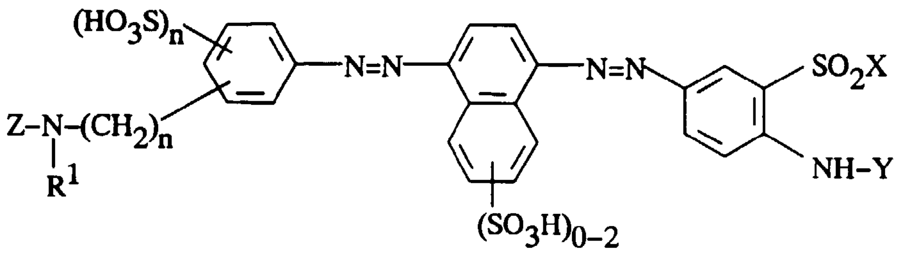

(17)

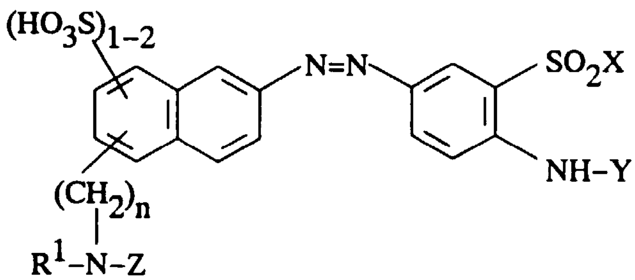

(18a)

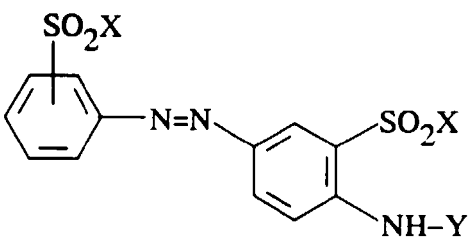

(18b)

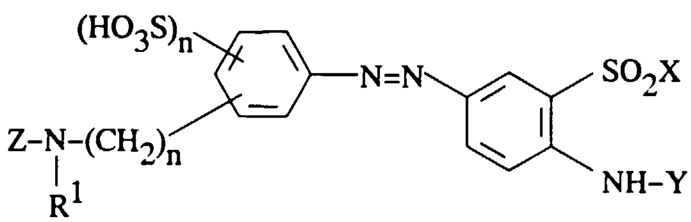

(19)

dans lesquelles
$R^2$ = H, $CH_3$, $OCH_3$, Cl ou $CH_2SO_3X$, les autres symboles ayant les significations indiquées dans la revendication 4.

**6.** Procédé de préparation des colorants réactifs selon la revendication 2, caractérisé en ce que l'on oxyde des thio-dérivés de structure (32)

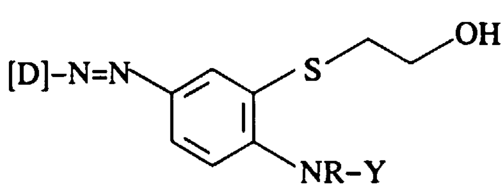

(32)

dans laquelle

Y a les significations indiquées dans la revendication 2 et représente plus spécialement le groupe $CH_2CH_2OH$ et

D et R ont les significations indiquées dans la revendication 2, en sulfones de structure (33)

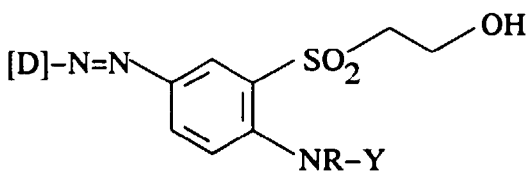

(33)

qu'on sulfate ensuite en composés (1) pour lesquels X = $CH_2CH_2OSO_3H$, ou bien on exécute simultanément les opérations de réaction, de sulfatation et d'oxydation.

7. Procédé pour la teinture et l'impression de matières contenant des groupes hydroxy et/ou des groupes amide à l'aide d'un colorant réactif, caractérisé en ce que l'on utilise un colorant selon la revendication 2.

8. Composé de formule

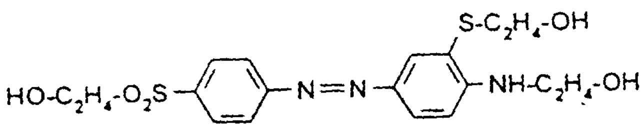

9. Composé de formule